# EUROPEAN PATENT APPLICATION

(11) **EP 4 462 919 A1**
(43) Date of publication of application: **13.11.2024**
(21) Application number: 23737038.2
(22) Date of filing: 04.01.2023
(51) Int. Cl.: H04W 72/12

(54) **METHOD FOR DETERMINING RESOURCE FOR PRACH REPETITION TRANSMISSION, AND TERMINAL AND NETWORK-SIDE DEVICE**

(30) Priority: 05.01.2022 CN 202210006549
(71) Applicant: VIVO MOBILE COMMUNICATION CO., LTD., Dongguan, Guangdong 523863 (CN)
(72) Inventor: WU, Kai, Dongguan, Guangdong 523863 (CN); YANG, Kun, Dongguan, Guangdong 523863 (CN)
(74) Representative: Lavoix
(86) International application number: PCT/CN2023/070396
(87) International publication number: WO 2023/131175

(57) **Abstract**

This application discloses a method for determining a PRACH repetition transmission resource, a terminal, and a network side device, relating to the field of communication technologies. The method for determining a PRACH repetition transmission resource in embodiments of this application includes: a terminal acquires resource configuration information for physical random access channel PRACH repetition transmission, where the resource configuration information indicates a configured resource for the PRACH repetition transmission; and the terminal determines whether the configured resource is used for PRACH repetition transmission.

## Description

### CROSS-REFERENCE TO RELATED APPLICATIONS

This application claims priority to Chinese Patent Application No. 202210006549.6 filed in China on January 5, 2022, which is incorporated herein by reference in its entirety.

### TECHNICAL FIELD

This application relates to the field of communications technologies, and in particular, to a method for determining a PRACH repetition transmission resource, a terminal, and a network side device.

### BACKGROUND

In conventional technologies, a random access procedure may be a contention-based random access procedure or a non-contention-based random access procedure. The random access procedure may be a 4-step random access procedure (also referred to as Type-1 random access procedure) or a 2-step random access procedure (also referred to as Type-2 random access procedure).

Physical random access channel (Physical Random Access Channel, PRACH) repetition (repetition) transmission in a time domain can improve PRACH coverage. In existing PRACH resource configuration solutions, resource configuration is sparse, and there may be a maximum PRACH configuration period of 160 ms. If the PRACH repetition transmission is performed by using such resource configuration solution, a long random access delay may be caused, and additional signaling overhead may be brought about.

### SUMMARY

Embodiments of this application provide a method for determining a PRACH repetition transmission resource, a terminal, and a network side device, to solve the problem of a long random access delay caused by existing resource configuration solutions.

According to a first aspect, a method for determining a PRACH repetition transmission resource is provided. The method for determining a PRACH repetition transmission resource is applied to a terminal, and includes:
the terminal acquires resource configuration information for physical random access channel PRACH repetition transmission, where the resource configuration information indicates a configured resource for the PRACH repetition transmission; and
the terminal determines whether the configured resource is used for PRACH repetition transmission.

According to a second aspect, an apparatus for determining a PRACH repetition transmission resource is provided. The apparatus for determining a PRACH repetition transmission resource is used in a terminal, and includes:
a first acquiring module, configured to acquire resource configuration information for physical random access channel PRACH repetition transmission, where the resource configuration information indicates a configured resource for the PRACH repetition transmission; and
a first determining module, configured to determine whether the configured resource is used for PRACH repetition transmission.

According to a third aspect, a method for determining a PRACH repetition transmission resource is provided. The method for determining a PRACH repetition transmission resource is applied to a network side device, and includes:
the network side device determines a configured resource for PRACH repetition transmission; and
the network side device determines whether the configured resource is used for receiving a repeatedly transmitted PRACH.

According to a fourth aspect, an apparatus for determining a PRACH repetition transmission resource is provided. The apparatus for determining a PRACH repetition transmission resource is used in a network side device, and includes:
a fourth determining module, configured to determine a configured resource for PRACH repetition transmission; and
a fifth determining module, configured to determine whether the configured resource is used for receiving a repeatedly transmitted PRACH.

According to a fifth aspect, a terminal is provided. The terminal includes a processor and a memory. The memory stores a program or instructions executable on the processor. The program or the instructions, when executed by the processor, implement steps of the method according to the first aspect.

According to a sixth aspect, a terminal is provided, and includes a processor and a communication interface. The processor is configured to: acquire resource configuration information for physical random access channel PRACH repetition transmission, where the resource configuration information indicates a configured resource for the PRACH repetition transmission; and determine whether the configured resource is used for PRACH repetition transmission.

According to a seventh aspect, a network side device is provided. The network side device includes a processor and a memory. The memory stores a program or instructions executable on the processor. The program or the instructions, when executed by the processor, implement steps of the method according to the third aspect.

According to an eighth aspect, a network side device is provided, and includes a processor and a communication interface. The processor is configured to: determine a configured resource for PRACH repetition transmission; and determine whether the configured resource is used for receiving a repeatedly transmitted PRACH.

According to a ninth aspect, an apparatus for determining a PRACH repetition transmission resource is provided, and includes: a terminal and a network side device. The terminal may be configured to perform steps of the method for determining a PRACH repetition transmission resource according to the first aspect. The network side device may be configured to perform steps of the method for determining a PRACH repetition transmission resource according to the third aspect.

According to a tenth aspect, a readable storage medium is provided. The readable storage medium stores a program or instructions. The program or the instructions, when executed by a processor, implement steps of the method according to the first aspect or implement steps of the method according to the third aspect.

According to an eleventh aspect, a chip is provided. The chip includes a processor and a communication interface. The communication interface is coupled to the processor. The processor is configured to run a program or instructions to implement the method according to the first aspect or implement the method according to the third aspect.

According to a twelfth aspect, a computer program/a program product is provided. The computer program/the program product is stored in a storage medium. The computer program/the program product is executed by at least one processor to implement steps of the method for determining a PRACH repetition transmission resource according to the first aspect or implement steps of the method for determining a PRACH repetition transmission resource according to the third aspect.

In embodiments of this application, the terminal acquires a configured resource for PRACH repetition transmission, and determines whether the configured resource is actually used for PRACH repetition transmission, so that the terminal performs PRACH repetition transmission by using a configured resource that can actually be used for PRACH repetition transmission, thereby reducing a random access delay.

### BRIEF DESCRIPTION OF THE DRAWINGS

FIG. 1 is a block diagram of a wireless communication system to which an embodiment of this application may be applied;
FIG. 2 is a diagram of SSB to FDM RO for mapping according to an embodiment of this application;
FIG. 3 is a diagram of SSB to TDM/FDM RO mapping according to an embodiment of this application;
FIG. 4 is a first flowchart of a method for determining a PRACH repetition transmission resource according to an embodiment of this application;
FIG. 5 illustrates a first RO processing method according to an embodiment of this application;
FIG. 6 illustrates a second RO processing method according to an embodiment of this application;
FIG. 7 illustrates a third RO processing method according to an embodiment of this application;
FIG. 8 illustrates a fourth RO processing method according to an embodiment of this application;
FIG. 9 illustrates a fifth RO processing method according to an embodiment of this application;
FIG. 10 is a second flowchart of a method for determining a PRACH repetition transmission resource according to an embodiment of this application;
FIG. 11 is a first diagram of a structure of an apparatus for determining a PRACH repetition transmission resource according to an embodiment of this application;
FIG. 12 is a second diagram of a structure of an apparatus for determining a PRACH repetition transmission resource according to an embodiment of this application;
FIG. 13 is a diagram of a structure of a communication device according to an embodiment of this application;
FIG. 14 is a diagram of a structure of a terminal according to an embodiment of this application; and
FIG. 15 is a diagram of a structure of a network side device according to an embodiment of this application.

### DETAILED DESCRIPTION

The technical solutions in embodiments of this application are clearly described below with reference to the accompanying drawings in embodiments of this application. Apparently, the described embodiments are merely some rather than all of embodiments of this application. All other embodiments obtained by a person of ordinary skill in the art based on embodiments of this application fall within the protection scope of this application.

In the specification and claims of this application, the terms "first", "second", and the like are used to distinguish similar objects, but are not used to describe a specific sequence or order. It should be understood that the terms used in such a way are interchangeable in a proper case, so that embodiments of this application can be implemented in an order different from the order shown or described herein. In addition, the objects distinguished by "first" and "second" are usually of a same type, without limiting a quantity of objects. For example, there may be one or more first objects. In addition, "and/or" in the specification and the claims means at least one of the connected objects, and the character "I" generally indicates an "or" relationship between the associated objects.

It should be noted that the technology described in embodiments of this application is not limited to a long term evolution (Long Term Evolution, LTE)/LTE-advanced (LTE-Advanced, LTE-A) system, and may further be used in other wireless communication systems, such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency division multiple access (Single-carrier Frequency Division Multiple Access, SC-FDMA), and another system. The terms "system" and "network" in embodiments of this application are often used interchangeably, and the described technologies may be used to both the systems and radio technologies mentioned above as well as to other systems and radio technologies. The following descriptions describe a new radio (New Radio, NR) system for illustrative purposes, and NR terms are used in most of the descriptions below. However, these technologies may also be applied to applications other than NR system applications, such as a 6^{th} generation (6^{th} Generation, 6G) communication system.

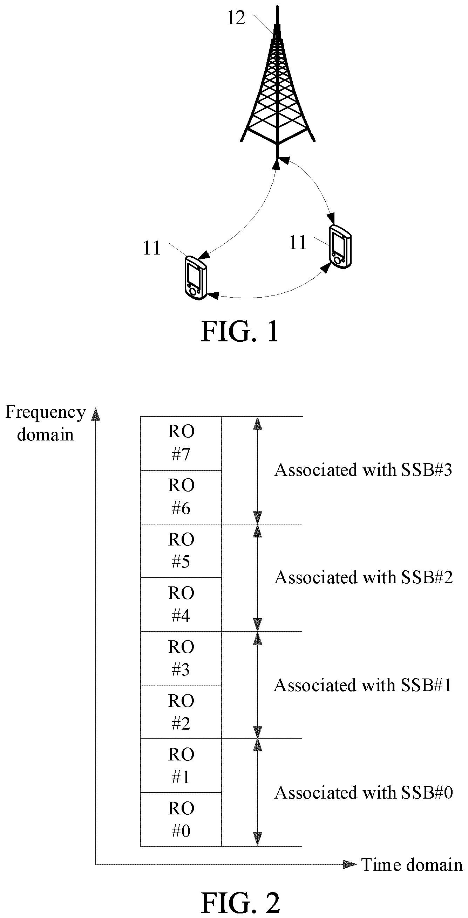

FIG. 1 is a block diagram of a wireless communication system to which an embodiment of this application may be applied. The wireless communication system includes a terminal 11 and a network side device 12. The terminal 11 may be a terminal side device, such as a mobile phone, a tablet personal computer (Tablet Personal Computer), a laptop computer (Laptop Computer), or referred to as a notebook computer, a personal digital assistant (Personal Digital Assistant, PDA), a palmtop computer, a netbook, an ultra-mobile personal computer (Ultra-mobile personal computer, UMPC), a mobile Internet device (Mobile Internet Device, MID), an augmented reality (augmented reality, AR)/virtual reality (virtual reality, VR) device, a robot, a wearable device (Wearable Device), vehicle user equipment (Vehicle User Equipment, VUE), pedestrian user equipment (Pedestrian User Equipment, PUE), a smart home appliance (a home appliance with a wireless communication function, for example, a refrigerator, a television, a washing machine, or furniture), a game console, a personal computer (personal computer, PC), a teller machine, or a self-service machine. The wearable device includes: a smart watch, a smart band, a smart earphone, smart glasses, smart jewelry (a smart bangle, a smart bracelet, a smart ring, a smart necklace, a smart ankle bangle, a smart anklet, or the like), a smart wristband, smart clothing, or the like. It should be noted that a specific type of the terminal 11 is not limited in embodiments of this application. The network side device 12 may include an access network device or a core network device. The access network device may also be referred to as a radio access network device, a radio access network (Radio Access Network, RAN), a radio access network function, or a radio access network unit. The access network device may include a base station, a wireless local area network (Wireless Local Area Network, WLAN) access point or a Wi-Fi node, or the like. The base station may be referred to as a Node B, an evolved Node B (Evolved Node B, eNB), an access point, a base transceiver station (Base Transceiver Station, BTS), a radio base station, a radio transceiver, a basic service set (Basic Service Set, BSS), an extended service set (Extended Service Set, ESS), a home Node B, a home evolved Node B, a transmitting receiving point (Transmitting Receiving Point, TRP), or another appropriate term in the art. The base station is not limited to a specific technical term, provided that a same technical effect is achieved. It should be noted that, in embodiments of this application, a base station in an NR system is merely used as an example, and a specific type of the base station is not limited.

Before embodiments of this application are described, some concepts involved in the following descriptions are first defined and described.

### I. Random access procedure

A random access procedure may be a contention-based random access procedure or a non-contention-based random access procedure. The random access procedure may be a 4-step random access procedure (also referred to as Type (Type)-1 random access procedure) or a 2-step random access procedure (also referred to as Type-2 random access procedure).

### (1) 4-step random access procedure (4-step RACH)

In a contention-based 4-step random access procedure, UE first sends Msg1 including a preamble (preamble) to a network side device. When the preamble is detected by a network, the network sends Msg2/a random access response (Random Access Response, RAR) message, including serial numbers of preambles detected by the network side device, and an uplink radio resource allocated to the UE for sending Msg3. Upon receipt of Msg2, the UE determines that at least one of the serial numbers of the preambles carried in Msg2 is consistent with a serial number of the preamble sent by the UE, and then sends, based on the resource indicated by the RAR, Msg3 including contention resolution information. Upon receipt of Msg3, the network side device sends Msg4 including contention resolution information. Upon receipt of Msg4, the UE determines that the contention resolution information is consistent with that in Msg3 sent by the UE, so that 4-step random access is completed.

The network side device puts, in the RAR, uplink grant (UpLink grant, UL grant) information, for indicating Msg3 physical uplink shared channel (Physical Uplink Shared Channel, PUSCH) scheduling information, and information such as a random access preamble identifier (RA preamble ID, RAPID), a temporary cell radio network temporary identifier (Temporary Cell Radio Network Temporary Identifier, TC-RNTI), and timing advance (Timing Advance, TA). If the network side device does not receive the Msg3 PUSCH, the network side device may schedule retransmission of the Msg3 PUSCH in a TC-RNTI scrambled physical downlink control channel (Physical downlink control channel, PDCCH).

In a contention-based random access procedure, different UEs randomly select preambles for transmission. Therefore, different UEs may select a same preamble for transmission on a same time-frequency radio resource. Such situation may be understood as a preamble conflict between UEs. In this case, different UEs receive a same RAR, and different UEs transmit a Msg3 PUSCH based on scheduling information in the RAR UL grant. When Msg3 PUSCH repetition transmission is not supported, the network side device can only decode a PUSCH transmitted by one UE (including contention resolution information) on one Msg3 PUSCH scheduling resource. Therefore, the network side device puts in Msg4 the received contention resolution information in Msg3. If the contention resolution information in Msg4 received by the UE matches the contention resolution information sent by the UE via the Msg3 PUSCH, the UE considers that contention is resolved successfully. If the contention resolution information in Msg4 received by the UE does not match the contention resolution information sent by the UE via the Msg3 PUSCH, the UE considers that resolution of the contention fails.

If the resolution of the contention fails, the UE reselects a RACH transmission resource, performs PRACH transmission, and attempts next random access.

### (2) 2-step random access procedure (2-step RACH)

First, a UE sends MsgA to a network side. Upon receipt of MsgA, the network side sends MsgB to the UE. If the UE does not receive MsgB within a specific period of time, the UE sends MsgA again together with an accumulated value of a counter counting a quantity of MsgA transmissions. If the counter counting the quantity of MsgA transmissions reaches a specific threshold, the UE switches from the 2-step random access procedure to the 4-step random access procedure. MsgA includes a MsgA preamble part and a MsgA PUSCH part. The preamble part is transmitted on an RO used for 2-step RACH. The PUSCH part is transmitted on MsgA PUSCH resources associated with sending the MsgA preamble and the RO. The MsgA PUSCH resources are a set of PUSCH resources, configured with respect to each physical random access channel slot (PRACH slot), including time-frequency resources and demodulation reference signal (Demodulation Reference Signal, DMRS) resources.

### II. Selection of random access resources and synchronization signal and PBCH block (Synchronization Signal and PBCH block, SSB)-to-RO mapping (mapping)

In NR, a cell may configure a plurality of physical random access channel transmission occasions (PRACH transmission occasions), which is also referred to as PRACH occasions and simply referred to as ROs for short, for frequency division multiplex (Frequency Division Multiplex, FDM) at a time domain position for PRACH transmission. At one moment, a quantity of ROs allowing for FDM may be: {1, 2, 4, 8}. As shown in FIG. 2, there are eight RO resources distributed on different frequencies in one moment.

A random access preamble (Preamble) can only be transmitted on time-domain resources (that is, RO resources) configured by a parameter, PRACH configuration index (PRACHConfigurationIndex). The random access preamble can only be transmitted on frequency-domain resources configured by a parameter, prach-FDM. A PRACH frequency-domain resource **n_{RA} ∈ {0,1, ··· M-1}**, where M is equal to the high layer parameter prach-FDM. During initial access, PRACH frequency-domain resources ***n_{RA}*** are numbered in ascending order starting from an RO resource having a lowest frequency within an initial active uplink bandwidth part (initial active uplink bandwidth part), or otherwise the PRACH frequency-domain resources ***n_{RA}*** are numbered in ascending order starting from the RO resource having the lowest frequency within an active uplink bandwidth part (active uplink bandwidth part). As shown in FIG. 2, the RO resources are numbered RO#0 to RO#7 in ascending order of frequencies.

In NR, there is an association between an RO and an actually transmitted SSB:
One SSB may be associated with a plurality of ROs, or a plurality of SSBs may be associated with one RO (in such case, different SSBs correspond to different preambles). Generally, a base station may use different beams to transmit different SSBs, and a corresponding UE sends preambles on ROs associated with the SSBs. In this way, the UE selects, based on strength of a received downlink beam/SSB, an RO associated with an SSB with good signal/a "RO-preamble combination" to transmit Msg1. In this way, the network side device can determine, based on the RO for the received preamble/the "RO-preamble combination", the SSB selected by the UE, and sends Msg2 on a downlink beam corresponding to the SSB to ensure reception quality of a downlink signal.

For example, in FIG. 2, there are eight ROs for FDM at one moment, and there are four SSBs actually transmitted, namely SSB#0, SSB#1, SSB#2, and SSB#3. Each SSB is associated with two ROs. If a UE determines to send a PRACH/Msg1/a preamble on an RO corresponding to SSB#0, the UE selects an RO from RO#0 and RO#1 to send the PRACH.

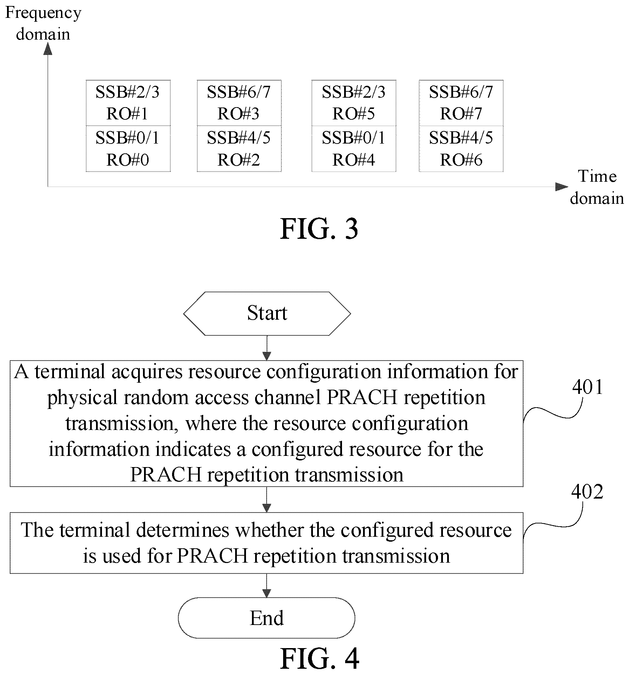

For example, in FIG. 3, there are two ROs for FDM at one moment, and there are eight SSBs actually transmitted, namely SSB#0, SSB#1, ..., and SSB#7. Every two SSBs are associated with one RO. When a plurality of SSBs share one RO, preamble sets associated with the plurality of SSBs are different. In other words, a same preamble cannot belong to preamble sets associated with different SSBs. For example, RO#0 in FIG. 3 has 60 preambles associated with SSBs, where preambles with indexes (indexes) 0-29 are associated with SSB#0, and preambles with indexes 30-59 are associated with SSB#1. It should be noted that each square in FIG. 3 is used for representing an RO, but not an SSB. The marking of SSBs is for indicating which SSB/SSBs is the RO associated with.

Before sending the PRACH, the UE first performs resource selection. First, the UE selects, based on reference signal received power (Reference Signal Received Power, RSRP) of received beams (beams) or SSBs, an SSB having an RSRP higher than a threshold. If the RSRP of a plurality of SSBs is higher than the threshold, the terminal can select any SSB having an RSRP higher than the threshold. If there is no SSB having an RSRP higher than the threshold, the UE selects an SSB based on an implementation.

Based on configuration of a network (Network, NW), the UE obtains correspondences between SSBs and ROs. After the SSB is selected, an RO corresponding to the selected SSB is used as an RO for transmitting the PRACH/preamble. If the selected SSB is associated with a plurality of ROs, the terminal can select one of the ROs to transmit the PRACH/preamble.

For example, in an embodiment as shown in FIG. 2, assuming that the UE selects SSB#1, the UE may select one of RO#2 and RO#3 to transmit the PRACH/preamble; and in an embodiment as shown in FIG. 3, assuming that the UE selects SSB#1, the UE may select an RO closest to current time from ROs (RO#0 or RO#4) associated with SSB#1 to transmit the PRACH/preamble.

The UE selects a preamble from a preamble set, associated with the selected SSB, in the selected RO to transmit the PRACH. As shown in FIG. 3, if one RO is associated with two SSBs, then preambles in available preamble sets, associated with SSBs, in an RO are divided into two subsets. Each subset corresponds to an SSB. The UE selects a specific preamble in a preamble subset corresponding to the selected SSB to perform PRACH transmission.

Associations between SSBs and PRACH resources include SSB to PRACH occasion mapping cycle (SSB to PRACH occasion mapping cycle) and SSB to PRACH occasion mapping association period (SSB to PRACH occasion mapping association period), and SSB to PRACH occasion association pattern period (SSB to PRACH occasion mapping pattern period). The purpose of the cycle time is mainly to complete at least one random access attempt within a predefined time period and to repeat mapping between a PRACH resource and an SSB in a specific pattern. During PRACH repetition, the PRACH repetition needs to ensure that such a pattern is not broken.

### III. Method for dealing with conflict between PRACH and another signal or Time Division Duplex (TDD) configuration

(1) If there is a set of PRACH occasions or PRACH sequences that are not mapped to an SS/PBCH block index (SSB index) after an integer quantity of SS/PBCH block index to PRACH occasion mapping cycles (mapping cycles) within an association period (association period), then no SS/PBCH block index is mapped to PRACH occasions or PRACH sequences. These PRACH resources cannot be used for PRACH transmission.
(2) The association pattern period includes one or more association periods and is determined such that a pattern between PRACH occasions and SS/PBCH block indexes (SSB indexes) repeats at most every 160 milliseconds. PRACH occasions (if any) that are not associated with SS/PBCH block indexes after an integer quantity of association periods are not used for PRACH transmission.
(3) If a MsgA PUSCH occasion does not overlap, in both time and frequency, any valid PRACH occasions related to a Type-1 random access procedure or a Type-2 random access procedure, the MsgA PUSCH occasion is valid. This means that when PRACH and MsgA PUSCH resources overlap, a PRACH is transmitted instead of a MsgA PUSCH.
(4) For operation on a single carrier in unpaired spectrum (for example, time division duplex (Time Division Duplex, TDD)), if a UE is configured by a higher layer (higher layer) to receive a PDCCH, a physical downlink shared channel (Physical downlink shared channel, PDSCH), a channel state information reference signal (Channel State Information Reference Signal, CSI-RS), or a downlink positioning reference signal (DL Positioning Reference Signal, DL-PRS) in a set of symbols in a specific slot (slot), then if the UE does not detect a downlink control information (Downlink Control Information, DCI) format that indicates to the UE to transmit a PUSCH, a PUCCH, a PRACH, or an SRS in at least one symbol of the set of symbols, the UE receives the PDCCH, the PDSCH, the CSI-RS, or the DL-PRS, otherwise the UE does not receive the PDCCH, the PDSCH, the CSI-RS, or the DL-PRS.
(5) For operation on a single carrier in unpaired spectrum, if a UE is configured by a higher layer to transmit a sounding reference signal (Sounding Reference Signal, SRS), a physical uplink control channel (Physical Uplink Control Channel, PUCCH), a PUSCH, or a PRACH in a set of symbols of a slot, and the UE detects a DCI format that indicates to the UE to receive a CSI-RS or a PDSCH from a subset of the set of symbols, then
   if the UE does not have a capability of "partial cancellation (partialCancellation)", and if a time interval between the first symbol in the set (a set of symbols for transmitting the SRS, the PUCCH, the PUSCH, or the PRACH) and the last symbol of a control resource set (Control resource set, CORESET) in a DCI format detected by the UE does not exceed **T_{proc2}**, the UE does not expect to cancel the transmission of the PUCCH, or the PUSCH, or the PRACH in the set, otherwise the UE cancels PRACH transmission, or decides to cancel actual repetition transmission of the PUCCH, the PUSCH, or the PUSCH according to relevant protocols.

If the UE has a capability of "partial cancellation (partialCancellation)", then if a time interval between a part of symbols in the set (a set of symbols for transmitting the SRS, the PUCCH, the PUSCH, or the PRACH) and the last symbol of a CORESET in a DCI format detected by the UE does not exceed **T_{*proc,*2}**, the UE does not expect to cancel the transmission of the PUCCH, or the PUSCH, or the PRACH on the part of symbols, and for other symbols than the part of symbols, the UE cancels the PRACH transmission, or decides to cancel actual repetition transmission of the PUCCH, the PUSCH, or the PUSCH according to relevant protocols.

It should be noted that, in embodiments of this application, both a RACH occasion (namely, RO) and a PRACH occasion are time-frequency resources required for transmitting a PRACH sequence, that is, both the RACH occasion and the PRACH occasion can be represented by RO.

The following describes in detail the method for determining a PRACH repetition transmission resource provided in embodiments of this application by using some embodiments and application scenarios thereof with reference to the accompanying drawings.

As shown in FIG. 4, an embodiment of this application provides a method for determining a PRACH repetition transmission resource, applied to a terminal, the method including:
Step 401: A terminal acquires resource configuration information for physical random access channel PRACH repetition transmission, where the resource configuration information indicates a configured resource for the PRACH repetition transmission.

In this embodiment, definitions of the PRACH repetition transmission and PRACH retransmission are different. PRACH repetition in embodiments of this application refers to repetition transmission during each PRACH initial transmission or retransmission process. PRACH repetition only occurs before the end of a random access response window (RAR window).

The resource configuration information for PRACH repetition transmission may be configured by a network side device. In other words, the network side device configures a resource for the terminal for PRACH repetition transmission. The configured resource refers to a resource configured by the network side device for the terminal for PRACH repetition transmission, and is not necessarily a transmission resource actually used by the terminal in PRACH repetition transmission. A resource for PRACH repetition refers to a PRACH resource used for transmitting PRACH repetition. A PRACH resource that does not support PRACH repetition refers to a PRACH resource that is used for transmitting a PRACH without repetition. The PRACH resource may be a PRACH time-frequency resource and/or a PRACH sequence.

Step 402: The terminal determines whether the configured resource is used for PRACH repetition transmission.

The terminal obtains, based on the resource configuration information, the configured resource configured by the network side device, and determines whether the configured resource is actually used for PRACH repetition transmission.

In embodiments of this application, the terminal obtains the configured resource for PRACH repetition transmission, and determines whether the configured resource is actually used for PRACH repetition transmission, so that the terminal performs PRACH repetition transmission by using a configured resource that can actually be used for PRACH repetition transmission, thereby reducing a random access delay.

In an optional embodiment, the determining whether the configured resource is used for PRACH repetition transmission includes at least one of the following:
(1) determining, based on validity of the configured resource, whether the configured resource is used for PRACH repetition transmission;
(2) determining, based on configuration information of a symbol where the configured resource is located, whether the configured resource is used for PRACH repetition transmission; or
(3) determining, based on a conflict situation between the configured resource and another signal resource, whether the configured resource is used for PRACH repetition transmission.

In this embodiment, the terminal may determine, based on one or a combination of two or more of the validity of the configured resource, the configuration information of the symbol where the configured resource is located, or the conflict situation between the configured resource and another signal resource, whether the configured resource can actually be used for PRACH repetition transmission. Optionally, during determining, based on validity of the configured resource, whether the configured resource is used for PRACH repetition transmission, the method may further include:
determining the validity of the configured resource, where the validity of the configured resource is related to a first gap requirement and/or time division duplex TDD uplink and downlink configuration; and
the first gap requirement is a timing gap requirement among SSB transmission, a symbol set used for SSB transmission, and a symbol set used for PRACH transmission.

In this embodiment, during determining, based on the validity of the configured resource, whether the configured resource is actually used for PRACH repetition transmission, the method for verifying the validity of the configured resource may be the same as the method for verifying the validity of the PRACH resource for transmission without repetition in conventional technologies. In other words, whether the configured resource is valid depends on the requirement on the gaps between SSB transmission, a symbol set used for SSB transmission, and a symbol set used for RPACH transmission as well as cell-specific TDD uplink-downlink configuration.

Optionally, for a commonly configured resource supporting both PRACH repetition transmission and PRACH transmission without repetition at the same time, a validity verification rule of the configured resource should be the same in both PRACH transmission cases. Therefore, a verification rule for PRACH transmission without repetition can be used in verification of the validity of the configured resource in embodiments of this application.

A method for validity verification includes, for example: For paired spectrum or supplementary uplink spectrum, all PRACH occasions are valid.

For unpaired spectrum:
if a UE is not provided with common TDD uplink and downlink configuration (tdd-UL-DL-ConfigurationCommon), a PRACH occasion in a PRACH slot is valid if it does not precede an SS/PBCH block in the PRACH slot and starts at least **N_{*ga*p}** symbols after a last SS/PBCH block reception symbol, where **N*_{gap}*** is provided in an existing protocol and, if channelAccessMode=semistatic is provided, does not overlap a set of consecutive symbols before the start of a next channel occupancy time where the UE does not transmit.

If a UE is provided with tdd-UL-DL-ConfigurationCommon, a PRACH occasion in a PRACH slot is valid if
it is within UL symbols; or
it does not precede an SS/PBCH block in the PRACH slot and starts at least **N_{gap}** symbols after a last downlink symbol and at least **N*_{gap}*** symbols after a last SS/PBCH block symbol, where **N*_{gap}*** is provided in an existing protocol and, if channelAccessMode=semistatic is provided, does not overlap a set of consecutive symbols before the start of a next channel occupancy time where there shall not be any transmissions;
the candidate SS/PBCH block index of the SS/PBCH block corresponds to the SS/PBCH block index provided by ssb-PositionsInBurst in SIB1 or in ServingCell ConfigCommon.

It should be noted that the method for determining the validity of the configured resource in embodiments of this application is merely an exemplary description. The validity of the configured resource may be alternatively determined based on another determining method. This is not limited herein.

The specific implementation process of determining whether the configured resource is actually used for PRACH repetition transmission through the foregoing three methods is described below through specific embodiments.

In an optional embodiment, the determining, based on validity of the configured resource, whether the configured resource is used for PRACH repetition transmission includes at least one of the following.
(1) Determine, based on validity of a first RO in the configured resource, whether the first RO is used for PRACH repetition transmission.

The configured resources include RO resources configured for PRACH repetition transmission. The first RO is an RO used only for PRACH repetition transmission. The first RO may include one or more ROs. In this embodiment, whether an RO can actually be used for PRACH repetition transmission is determined based on the validity of an additional configured RO that is used only for PRACH repetition transmission.

Optionally, the determining, based on validity of a first RO in the configured resource, whether the first RO is used for PRACH repetition transmission includes: if a first target RO of the first RO is invalid, determining that the first target RO is not used for PRACH repetition transmission.

In this embodiment, the first target RO may refer to one or more ROs of the first RO. For an RO that is used only for PRACH repetition transmission, if the RO is invalid, the RO is discarded and cannot be used for PRACH repetition transmission. When the first target RO is invalid and discarded, the first target RO may not be counted, or the first target RO may be counted. Details are described separately below.

Optionally, the method further includes: postponing a time domain position of the first target RO by one RO to obtain a second target RO, where the second target RO is used for PRACH repetition transmission.

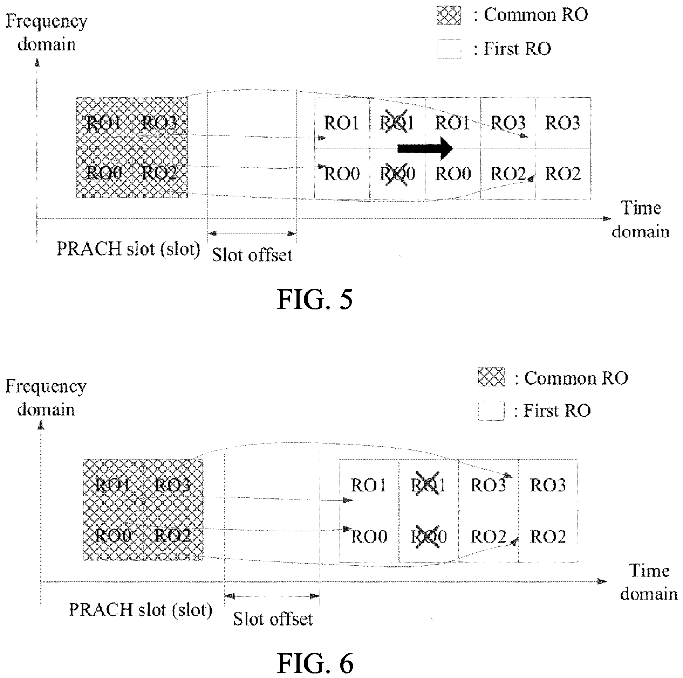

In this case, when the first target RO is invalid, the first target RO is not counted. The invalid first target RO may be postponed to obtain a new valid second target RO, to guarantee a quantity of valid PRACH repetitions. For example, as shown in FIG. 5, the configured resource includes common ROs and first ROs. The common ROs are used for the first PRACH repetition. The first ROs include RO0, RO1, RO2, and RO3 for PRACH repetition. There are two RO0, two RO 1, two RO2, and two RO3, for performing two PRACH repetitions, respectively. If one RO0 and one RO1 are invalid due to overlapping SSB transmission (that is, one RO0 and one RO 1 on the right side in FIG. 5 are the first target ROs), the invalid RO0 and RO1 are postponed by one RO, to ensure that there are corresponding additional two ROs for PRACH repetition transmission, so as to ensure that a quantity of configured PRACH repetitions remains unchanged.

Optionally, the first target RO is counted in a quantity of ROs for the PRACH repetition transmission.

In this embodiment, when the first target RO is invalid, the first target RO is discarded, but is still counted. For the first ROs configured separately only for PRACH repetition transmission, provided that the common ROs are valid (or the common ROs are valid but not actually used for PRACH repetition transmission), the first ROs are all mapped to the common ROs. If one or more of the first ROs are invalid, the invalid first RO is discarded, but is still counted. The common RO is a commonly configured RO (which may also be referred to as a shared RO) used for both the PRACH repetition transmission and PRACH transmission without repetition.

For example, as shown in FIG. 6, the configured resource includes common ROs and first ROs. The common ROs are used for the first PRACH repetition. The first ROs include RO0, RO1, RO2, and RO3 for PRACH repetition. There are two RO0, two RO1, two RO2, and two RO3, for performing two PRACH repetitions, respectively. If one RO0 and one RO1 are invalid due to overlapping SSB transmission (that is, one RO0 and one RO1 on the right side in FIG. 6 are the first target ROs) and are discarded without postponing, then the PRACH transmission on RO0 and RO1 can only be repeated twice (including the first repetition on the left), and the PRACH repetition transmission on RO2 and RO3 can be repeated three times (including the first repetition on the left) because all ROs are valid.

It should be noted that, when the configured resource includes common ROs and first ROs, the common ROs are associated with the corresponding first ROs. For example, as shown in FIG. 5 and FIG. 6, RO0 of the common ROs on the left is associated with the two RO0 of the first ROs on the right, and RO1 in the common RO on the left is associated with the two RO1 on the right. Other ROs can be deduced in the same way and will not be described in detail here.

(2) Determine, based on validity of a common RO in the configured resource, whether a first RO in the configured resource is used for PRACH repetition transmission. The common RO is a commonly configured RO used for the PRACH repetition transmission and PRACH transmission without repetition. The first RO is an RO used only for PRACH repetition transmission.

In this embodiment, validity of a common RO is determined to determine whether a first RO associated with the common RO is actually used for PRACH repetition transmission.

Optionally, the determining, based on validity of a common RO in the configured resource, whether a first RO in the configured resource is used for PRACH repetition transmission includes at least one of the following.
a. If a first common RO of the common RO is invalid, determine that the first RO associated with the first common RO is not used for PRACH repetition transmission.

In this embodiment, the first common RO may be one or more ROs of the common ROs. If the first common RO is invalid, the first RO associated with the first common RO is discarded and not used for PRACH repetition transmission.

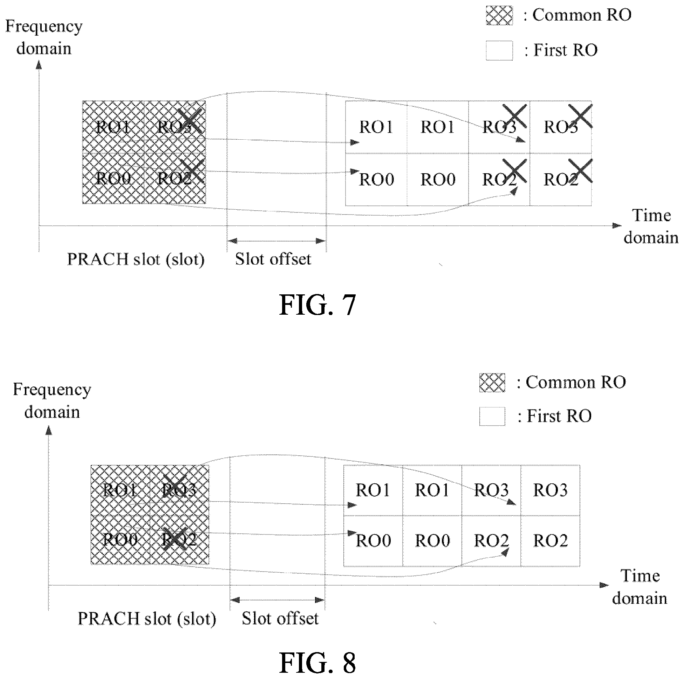

For example, as shown in FIG. 7, the configured resource includes common ROs and first ROs. The common ROs are used for the first PRACH repetition. The first ROs include RO0, RO1, RO2, and RO3 for PRACH repetition. There are two RO0, two RO1, two RO2, and two RO3, for performing two PRACH repetitions, respectively. If two common ROs (RO2 and RO3 on the left) conflict with a PDSCH scheduled by dynamic grant in downlink, then additionally configured first ROs (two RO2 and two RO3 on the right) associated with these two common ROs are discarded without actual transmission, no actual PRACH repetition transmission is performed.

b. If a first common RO of the common RO is valid but is not used in PRACH repetition transmission, determine that the first RO associated with the first common RO is not used for PRACH repetition transmission.

In this embodiment, a part of common ROs in the configured resource may be valid, but due to conflicting with another resource or being configured as unavailable, the valid common RO is not used in actual PRACH repetition transmission. Therefore, the first RO associated with the common RO is not used for actual PRACH repetition transmission. The specific embodiment is shown in FIG. 7 and is not described herein again.

c. If a first common RO of the common RO is invalid, determine that the first RO associated with the first common RO is used for PRACH repetition transmission.

In this embodiment, if the first common RO is invalid, the first RO associated with the first common RO is still used for PRACH repetition transmission. For example, as shown in FIG. 8, the configured resource includes common ROs and first ROs. The common ROs are used for the first PRACH repetition. The first ROs include RO0, RO1, RO2, and RO3 for PRACH repetition. There are two RO0, two RO1, two RO2, and two RO3, for performing two PRACH repetitions, respectively. If two common ROs (RO2 and RO3 on the left) conflict with a PDSCH scheduled by dynamic grant in downlink, then additionally configured first ROs (two RO2 and two RO3 on the right) associated with these two common ROs are still used for PRACH repetition transmission, that is, are not discarded.

d. If a first common RO of the common RO is valid but is not used in PRACH repetition transmission, determine that the first RO associated with the first common RO is used for PRACH repetition transmission.

In this embodiment, if the first common RO is valid but is not actually used in PRACH repetition transmission, the first RO associated with the first common RO is still used for PRACH repetition transmission, for example, as shown in FIG. 8. Details are not described herein.

In this embodiment, whether the configured resource is used for actual PRACH repetition transmission is determined based on the validity of the first RO and/or the common RO. For example, when PRACH repetition conflicts with another resource, a part of PRACH repetitions may be discarded to ensure that another high-priority signal can be transmitted or received on time. Alternatively, to guarantee a quantity of actual PRACH repetitions, a PRACH occasion for repetition is postponed, and ROs that are invalid or do not actually transmit the PRACH are skipped. Alternatively, even if a resource for the first repetition is invalid or a PRACH is not actually transmitted, PRACH resources of subsequent repetitions may continue to transmit the remaining PRACH repetitions, thereby reducing a random access delay.

The following describes a specific implementation process of determining, based on the configuration information of the symbol where the configured resource is located, whether the configured resource is used for PRACH repetition transmission.

In an optional embodiment, the determining, based on configuration information of a symbol where the configured resource is located, whether the configured resource is used for PRACH repetition transmission includes at least one of the following.
(A) If a symbol where a third target RO of a first RO is located is configured as a flexible symbol in common TDD uplink and downlink configuration information (tdd-UL-DL-configurationCommon) and as downlink in dedicated TDD uplink and downlink configuration information (tdd-UL-DL-ConfigurationDedicated), determine that the third target RO is not used for PRACH repetition transmission. The first RO is an RO in the configured resource that is used only for PRACH repetition transmission.

In this embodiment, the third target RO is one or more of the first ROs that are used only for PRACH repetition transmission. If a symbol where an additionally configured RO (for example, the third target RO of the first ROs) used for PRACH repetition transmission is located is configured as a flexible symbol (flexible) in tdd-UL-DL-configurationCommon, and as DL in tdd-UL-DL-ConfigurationDedicated, the third target RO is not used for PRACH repetition transmission.

(B) If a symbol where a third target RO of a first RO is located is configured as a flexible symbol in common TDD uplink and downlink configuration information and as downlink in a DCI format, determine that the third target RO is not used for PRACH repetition transmission.

In this embodiment, the DCI format may be DCI format2-0. If a symbol where an additionally configured RO (for example, the third target RO of the first ROs) used for PRACH repetition transmission is located is configured as flexible in tdd-UL-DL-configurationCommon, and is indicated as DL in DCI format2-0, the RO is not used for PRACH repetition transmission.

(C) If a symbol where a third target RO of a first RO is located is configured as a flexible symbol in first configuration information, and the terminal receives a downlink signal on the symbol, determine that the third target RO is not used for PRACH repetition transmission. The first configuration information includes: at least one of the common TDD uplink and downlink configuration information (tdd-UL-DL-configurationCommon), the dedicated TDD uplink and downlink configuration information (tdd-UL-DL-ConfigurationDedicated), or the DCI format.

In this embodiment, the downlink signal is, for example, a PDCCH or a PDSCH, and the DCI format is, for example, DCI format2-0. In other words, if a symbol where an additionally configured RO (for example, the third target RO of the first ROs) used for PRACH repetition transmission is located is configured as flexible in tdd-UL-DL-configurationCommon and/or tdd-UL-DL-ConfigurationDedicated and/or DCI format2-0, but the downlink signal is received on the foregoing symbol (that is, the symbol where the RO is located), then the third target RO is not used for PRACH repetition transmission.

In this embodiment, whether the configured resource is actually used for PRACH repetition transmission is determined based on the configuration information of the symbol where the configured resource is located, to provide the UE with a scheme for usage of transmission resources under different configurations, thereby guaranteeing the configured resource and reducing a random access delay.

The following describes an implementation process of determining, based on a conflict situation between the configured resource and another signal resource, whether the configured resource is actually used for PRACH repetition transmission.

In an optional embodiment, the determining, based on a conflict situation between the configured resource and another signal resource, whether the configured resource is used for PRACH repetition transmission includes at least one of the following.
(i) If a fourth target RO of a first RO at least partially overlaps a transmission resource of first uplink information in a random access procedure, determine that the fourth target RO is not used for PRACH repetition transmission. The first RO is an RO in the configured resource that is used only for PRACH repetition transmission.

The fourth target RO may be one or more ROs of the first ROs that are used only for PRACH repetition transmission. The first uplink information may be MsgA in a random access procedure. To be specific, for an additionally configured RO (for example, the fourth target RO) used for PRACH repetition transmission, if the RO at least partially overlaps MsgA PUSCH transmission, the RO is not used for PRACH repetition transmission.

In this embodiment, a UE that does not support PRACH repetition may not read or recognize additionally configured ROs used for PRACH repetition transmission. This means that a MsgA PUSCH necessarily takes precedence over individual ROs configured for PRACH repetition, that is, the MsgA PUSCH takes precedence over transmission of the fourth target RO. In addition, when the fourth target RO overlaps a resource for the MsgA PUSCH, a part of PRACH repetitions is discarded to protect the MsgA PUSCH. This may not cause PRACH reception failure, but can ensure timely transmission of the MsgA PUSCH.

(ii) If high layer signaling instructs the terminal to receive a downlink signal in a set of symbols within a slot, DCI format information indicates that the terminal performs PRACH repetition transmission in a fourth target RO, and the fourth target RO overlaps at least one symbol in a symbol set where the slot is located, determine that the fourth target RO is not used for PRACH repetition transmission.

In this embodiment, for operation on a single carrier in unpaired spectrum, if a UE is configured by a higher layer to receive a downlink signal such as a PDCCH, or a PDSCH, or a CSI-RS, or a DL PRS in a set of symbols of a slot, the UE receives the downlink signal such as the PDCCH, the PDSCH, the CSI-RS, or the DL PRS. Even if the UE detects a DCI format that indicates to the UE to transmit PRACH repetitions in an additional configured RO (for example, the fourth target RO), and an additionally configured RO (for example, the fourth target RO) overlaps at least one symbol in the symbol set of the slot, the UE does not perform PRACH repetition transmission on the fourth target RO, but receives the downlink signal on the symbol of the slot.

In this embodiment, the priority of downlink signal reception is higher than that of PRACH repetition transmission. Corresponding modifications may be made to relevant protocols. For example,
for operation on a single carrier in unpaired spectrum, if a UE is configured by a higher layer to receive a downlink signal such as a PDCCH, or a PDSCH, or a CSI-RS, or a DL PRS in a set of symbols of a slot, the UE receives the PDCCH, the PDSCH, the CSI-RS, or the DL PRS if the UE does not detect a DCI format that indicates to the UE to transmit a PUSCH, a PUCCH, a PRACH without repetition, or an SRS in at least one symbol in the set of symbols of the slot; otherwise, and if the UE does not detect a DCI format that indicates to the UE to transmit a PRACH with repetition, the UE does not receive the downlink signal such as the PDCCH, or the PDSCH, or the CSI-RS, or the DL PRS in the set of symbols of the slot (For operation on a single carrier in unpaired spectrum, if a UE is configured by higher layers to receive a PDCCH, or a PDSCH, or a CSI-RS, or a DL PRS in a set of symbols of a slot, the UE receives the PDCCH, the PDSCH, the CSI-RS, or the DL PRS if the UE does not detect a DCI format that indicates to the UE to transmit a PUSCH, a PUCCH, a PRACH without repetition, or a SRS in at least one symbol of the set of symbols of the slot; otherwise and if the UE does not detect a DCI format that indicates to the UE to transmit a PRACH with repetition, the UE does not receive the PDCCH, or the PDSCH, or the CSI-RS, or the DL PRS in the set of symbols of the slot).

(iii) If high layer signaling instructs the terminal to perform PRACH repetition transmission in a target symbol of a fourth target RO, and the DCI format information indicates that the terminal receives a downlink signal in a symbol subset of the target symbol, the fourth target RO is not used for PRACH repetition transmission.

In this embodiment, for operation on a single carrier in unpaired spectrum, if a UE is configured by a higher layer to transmit PRACH repetitions in a set of symbols corresponding to a specific slot on an additional configured RO (for example, the fourth target RO), and the UE detects a DCI format that indicates to the UE to receive a downlink signal (such as CSI-RS or PDSCH) in a symbol subset from the set of symbols, then the UE does not perform PRACH repetition transmission in the fourth target RO, but receives the downlink signal in a subset of the target symbol. Optionally, the fourth target RO is not used for PRACH repetition transmission, but the corresponding PRACH repetition is still counted.

In this embodiment, whether the configured resource is used for PRACH repetition transmission is determined based on a conflict situation between the configured resource and another signal resource. When PRACH repetition conflicts with another resource, a part of PRACH repetitions may be discarded to ensure that another high-priority signal can be transmitted or received on time.

In an optional embodiment, the method further includes: determining a power allocation priority of the PRACH repetition transmission.

The power allocation priority includes at least one of the following.
(1) A power allocation priority of PRACH repetition transmission is lower than a power allocation priority of PRACH transmission without repetition on a primary cell (PCell).

In this embodiment, the power allocation priority of a PRACH transmitted repeatedly is lower than that of another uplink signal transmitted at the same time during a carrier aggregation process. Corresponding modifications may be made to relevant protocols. For example,
the total UE transmit power in a symbol of a slot is defined as the sum of the linear values of UE transmit powers for PUSCH, PUCCH, PRACH, and SRS in the symbol of the slot (The total UE transmit power in a symbol of a slot is defined as the sum of the linear values of UE transmit powers for PUSCH, PUCCH, PRACH, and SRS in the symbol of the slot).

PRACH transmission without repetition on the Pcell (PRACH transmission without repetition on the Pcell);
PUCCH or PUSCH transmissions with higher priority index (PUCCH or PUSCH transmissions with higher priority index according to clause 9);
for PUCCH or PUSCH transmissions with same priority index (For PUCCH or PUSCH transmissions with same priority index);
PUCCH transmission with hybrid automatic repeat request acknowledgment (Hybrid automatic repeat request acknowledgment, HARQ-ACK) information, and/or scheduling request (Scheduling Request, SR), and/or link recovery request (Link recovery request, LRR), or PUSCH transmission with HARQ-ACK information (PUCCH transmission with HARQ-ACK information, and/or SR, and/or LRR, or PUSCH transmission with HARQ-ACK information);
PUCCH transmission with CSI or PUSCH transmission with CSI (PUCCH transmission with CSI or PUSCH transmission with CSI);
PUSCH transmission without HARQ-ACK information or CSI and, for Type-2 random access procedure, PUSCH transmission on the Pcell (PUSCH transmission without HARQ-ACK information or CSI and, for Type-2 random access procedure, PUSCH transmission on the Pcell);
SRS transmission, with aperiodic SRS having higher priority than semi-persistent and/or periodic SRS, or PRACH transmission on a serving cell other than the Pcell or PRACH repetition transmissions (SRS transmission, with aperiodic SRS having higher priority than semi-persistent and/or periodic SRS, or PRACH transmission on a serving cell other than the Pcell or PRACH repetition transmissions).

(2) A power allocation priority of PRACH repetition transmission is the same as a power allocation priority of PRACH transmission without repetition on a primary cell.

In this embodiment, the power allocation priority a PRACH repeated is higher than that of another uplink signal transmitted at the same time during a carrier aggregation process. Corresponding modifications may be made to relevant protocols. For example:
the total UE transmit power in a symbol of a slot is defined as the sum of the linear values of UE transmit powers for PUSCH, PUCCH, PRACH, and SRS in the symbol of the slot (The total UE transmit power in a symbol of a slot is defined as the sum of the linear values of UE transmit powers for PUSCH, PUCCH, PRACH, and SRS in the symbol of the slot).

PRACH transmission on the Pcell or PRACH repetition transmission (PRACH transmission on the Pcell or PRACH repetition transmission);
PUCCH or PUSCH transmissions with higher priority index (PUCCH or PUSCH transmissions with higher priority index according to clause 9);
for PUCCH or PUSCH transmissions with same priority index (For PUCCH or PUSCH transmissions with same priority index);
PUCCH transmission with HARQ-ACK information, and/or SR, and/or LRR, or PUSCH transmission with HARQ-ACK information (PUCCH transmission with HARQ-ACK information, and/or SR, and/or LRR, or PUSCH transmission with HARQ-ACK information);
PUCCH transmission with CSI or PUSCH transmission with CSI (PUCCH transmission with CSI or PUSCH transmission with CSI);
PUSCH transmission without HARQ-ACK information or CSI and, for Type-2 random access procedure, PUSCH transmission on the Pcell (PUSCH transmission without HARQ-ACK information or CSI and, for Type-2 random access procedure, PUSCH transmission on the Pcell);
SRS transmission, with aperiodic SRS having higher priority than semi-persistent and/or periodic SRS, or PRACH transmission on a serving cell other than the Pcell (SRS transmission, with aperiodic SRS having higher priority than semi-persistent and/or periodic SRS, or PRACH transmission on a serving cell other than the Pcell).

(3) If the PRACH repetition transmission is performed on a primary cell, the power allocation priority of the PRACH repetition transmission is the same as a power allocation priority of PRACH transmission without repetition on the primary cell.

(4) If the PRACH repetition transmission is performed on a non-primary cell, the power allocation priority of the PRACH repetition transmission is the same as a power allocation priority of PRACH transmission without repetition on the non-primary cell.

(5) A power allocation priority of PRACH repetition transmission is the same as a power allocation priority of PRACH transmission without repetition on a non-primary cell.

In this embodiment, the power allocation priority of the PRACH repetition transmission is defined to ensure that a signal with high priority can be transmitted or received on time, so as to ensure normal signal transmission.

In an optional embodiment, the PRACH repetition transmission is completed within first duration.

The first duration includes at least one of the following:
M times an SSB-to-RO mapping cycle;
N times an SSB-to-RO mapping association period;
L times an SSB-to-RO association pattern period;
a time value corresponding to a random access response window, where a maximum value of the random access response window may be 10 ms; or
an SSB to PRACH repetition transmission RO association pattern period, where the SSB to PRACH repetition transmission RO association pattern period may be additionally configured for the PRACH repetition transmission, and
M, N, and L are positive integers. Specific values of M, N, and L may be defined by a protocol or configured by a system message.

In this embodiment, the SSB to PRACH repetition transmission RO association pattern period is additionally defined, and may include one or more SSB-to-RO association pattern periods. The pattern between the PRACH repetition RO and the SSB can be repeated at most every predetermined time period (for example, every 640 ms). Optionally, the predetermined time period may be a positive integer multiple of the SSB to PRACH (existing and transmitted each time) RO association pattern period.

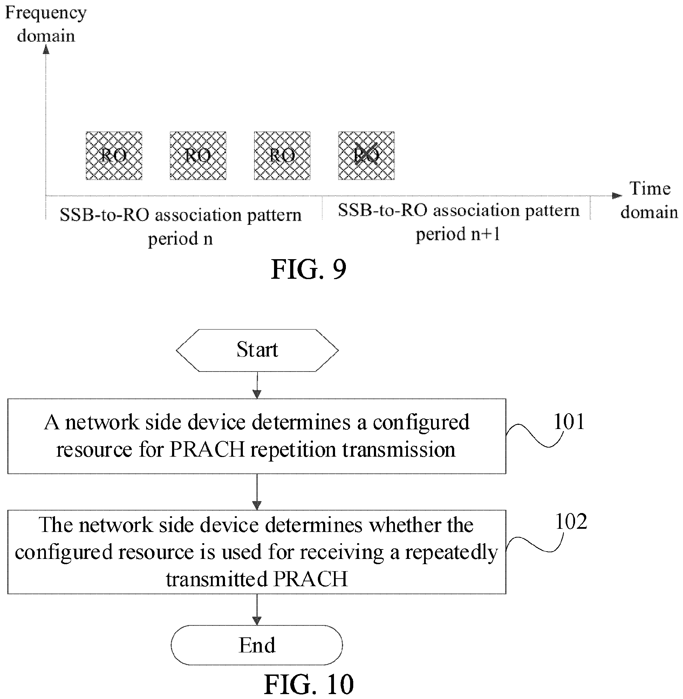

For example, as shown in FIG. 9, ROs for four repetition transmissions are configured. The first three repetition transmissions are within the SSB to RO association pattern period, but the fourth repetition occurs within a next SSB to RO association pattern period, then the fourth repetition is to be discarded. It should be noted that the ROs in FIG. 9 represent ROs configured for the PRACH repetition transmission, and may be common ROs or first ROs. This is not limited herein.

Optionally, if the configured PRACH repetition transmissions are not completed within the foregoing first duration, all the remaining PRACH repetition transmissions may be discarded, or part of the transmissions may be completed before the end of the first duration.

In embodiments of this application, the terminal obtains the configured resource for PRACH repetition transmission, and determines whether the configured resource is actually used for PRACH repetition transmission, to provide a solution when the configuration resource is invalid or conflicts with another signal resource, thereby reducing a random access delay. For example, when PRACH repetitions conflict with another resource, a part of PRACH repetitions may be discarded or transmission power may not be increased, to ensure that another high-priority signal can be transmitted or received on time. Alternatively, to guarantee a quantity of actual PRACH repetitions, a PRACH occasion for repetition needs to be postponed, and ROs that are invalid or do not actually transmit the PRACH are skipped. Alternatively, even if a resource for the first repetition is invalid or a PRACH is not actually transmitted, PRACH resources of subsequent repetitions may continue to transmit the remaining PRACH repetitions, thereby reducing a random access delay.

As shown in FIG. 10, an embodiment of this application further provides a method for determining a PRACH repetition transmission resource, applied to a network side device, and including:
Step 101: The network side device determines a configured resource for PRACH repetition transmission.
Step 102: The network side device determines whether the configured resource is used for receiving a repeatedly transmitted PRACH.

In this embodiment, definitions of the PRACH repetition transmission and PRACH retransmission are different. PRACH repetition in embodiments of this application refers to repetition transmission during each PRACH initial transmission or retransmission process. PRACH repetition only occurs before the end of a random access response window.

The network side device configures for a terminal a resource for PRACH repetition transmission. The configured resource refers to a resource configured by the network side device for the terminal for PRACH repetition transmission, and is not necessarily a transmission resource actually used by the terminal in PRACH repetition transmission. A resource for PRACH repetition refers to a PRACH resource used for transmitting PRACH repetition. A PRACH resource that does not support PRACH repetition refers to a PRACH resource that is used for transmitting a PRACH without repetition. The PRACH resource may be a PRACH time-frequency resource and/or a PRACH sequence.

The terminal determines whether the configured resource is actually used for PRACH repetition transmission, and performs PRACH repetition transmission on the configured resource actually for the transmission. The network side device also needs to determine, based on a rule corresponding to the terminal, whether the configured resource is actually used for PRACH repetition transmission and receive a repeatedly transmitted PRACH on the configured resource actually for the transmission.

In embodiments of this application, the network side device configures a resource for PRACH repetition transmission, and determines whether the configured resource is actually used for PRACH repetition transmission, so that the network side device can receive a repeatedly transmitted PRACH on the configured resource actually used for PRACH repetition transmission, thereby reducing a random access delay.

Optionally, the method further includes: sending, to a terminal, resource configuration information for the PRACH repetition transmission, where the resource configuration information indicates the configured resource.

In this embodiment, the network side device configures the configured resource for PRACH repetition transmission, and may send the configured resource to the terminal through the resource configuration information, so that the terminal determines whether the configured resource is actually used for PRACH repetition transmission, to provide a solution when the configuration resource is invalid or conflicts with another signal resource, thereby reducing a random access delay.

Optionally, the determining whether the configured resource is used for receiving a repeatedly transmitted PRACH includes at least one of the following:
(1) determining, based on validity of the configured resource, whether the configured resource is used for receiving the repeatedly transmitted PRACH;
(2) determining, based on configuration information of a symbol where the configured resource is located, whether the configured resource is used for receiving the repeatedly transmitted PRACH; or
(3) determining, based on a conflict situation between the configured resource and another signal resource, whether the configured resource is used for receiving the repeatedly transmitted PRACH.

In this embodiment, the terminal may determine, based on one or a combination of two or more of the validity of the configured resource, the configuration information of the symbol where the configured resource is located, or the conflict situation between the configured resource and another signal resource, whether the configured resource can actually be used for PRACH repetition transmission. Optionally, during determining, based on validity of the configured resource, whether the configured resource is used for receiving the repeatedly transmitted PRACH, the method may further include:
determining the validity of the configured resource, where the validity of the configured resource is related to a first gap requirement and/or time division duplex TDD uplink and downlink configuration; and the first gap requirement is a timing gap requirement among SSB transmission, a symbol set used for SSB transmission, and a symbol set used for PRACH transmission.

In this embodiment, during determining, based on the validity of the configured resource, whether the configured resource is for receiving the repeatedly transmitted PRACH, the method for verifying the validity of the configured resource may be the same as the method for verifying the validity of the PRACH resource for transmission without repetition in conventional technologies. In other words, whether the configured resource is valid depends on the requirement on the gaps between SSB transmission, a symbol set used for SSB transmission, and a symbol set used for RPACH transmission as well as cell-specific TDD uplink-downlink configuration.

Optionally, for a commonly configured resource supporting both PRACH repetition transmission and PRACH transmission without repetition at the same time, a validity verification rule of the configured resource should be the same in both PRACH transmission cases. Therefore, a verification rule for PRACH transmission without repetition can be used in verification of the validity of the configured resource in embodiments of this application. A method for determining the validity of the configured resource is not limited herein.

The specific implementation process of determining whether the configured resource is used for receiving a repeatedly transmitted PRACH through the foregoing three methods is described below through specific embodiments.

In an optional embodiment, the determining, based on the validity of the configured resource, whether the configured resource is used for receiving the repeatedly transmitted PRACH includes at least one of the following.
(1) Determine, based on validity of a first RO in the configured resource, whether the configured resource is used for receiving the repeatedly transmitted PRACH.

The configured resources include RO resources configured for PRACH repetition transmission. The first RO is an RO used only for PRACH repetition transmission. The first RO may include one or more ROs. In this embodiment, whether an RO can actually be used for PRACH repetition transmission, that is, whether the network side device needs to receive the repeatedly transmitted PRACH on the first RO, is determined based on the validity of an additional configured RO that is used only for PRACH repetition transmission.

Optionally, the determining, based on validity of a first RO in the configured resource, whether the configured resource is used for receiving the repeatedly transmitted PRACH includes: if a first target RO of the first RO is invalid, determining that the first target RO is not used for receiving the repeatedly transmitted PRACH. The first RO is an RO used only for PRACH repetition transmission.

In this embodiment, the first target RO may refer to one or more ROs of the first RO. For an RO that is used only for PRACH repetition transmission, if the RO is invalid, the RO is discarded and cannot be used for PRACH repetition transmission. When the first target RO is invalid and discarded, the first target RO may not be counted, or the first target RO may be counted. Details are described separately below.

Optionally, the method further includes: determining a time domain position of a second target RO, where the second target RO is obtained by postponing a time domain position of the first target RO by one RO, and the second target RO is used for receiving the repeatedly transmitted PRACH.

In this case, when the first target RO is invalid, the first target RO is not counted. The invalid first target RO may be postponed to obtain a new valid second target RO, to guarantee a quantity of valid PRACH repetitions. This is illustrated in FIG. 5 and is not described herein again.

Optionally, the first target RO is counted in a quantity of ROs for the PRACH repetition transmission. In this embodiment, when the first target RO is invalid, the first target RO is discarded, but is still counted. For the first ROs configured separately only for PRACH repetition transmission, provided that the common ROs are valid (or the common ROs are valid but not actually used for PRACH repetition transmission), the first ROs are all mapped to the common ROs. If one or more of the first ROs are invalid, the invalid first RO is discarded, but is still counted. This is illustrated in FIG. 6 and is not described herein again.

(2) Determine, based on validity of a common RO in the configured resource, whether the configured resource is used for receiving the repeatedly transmitted PRACH. The common RO is a commonly configured RO used for the PRACH repetition transmission and PRACH transmission without repetition.

In this embodiment, whether the first RO associated with the first common RO is used for receiving the repeatedly transmitted PRACH is determined by determining the validity of the common RO.

Optionally, the determining, based on validity of a common RO in the configured resource, whether the configured resource is used for receiving the repeatedly transmitted PRACH includes at least one of the following.
a. If a first common RO of the common RO is invalid, determine that the first RO associated with the first common RO is not used for receiving the repeatedly transmitted PRACH.

In this embodiment, the first common RO may be one or more ROs of the common ROs. If the first common RO is invalid, the first RO associated with the first common RO is discarded and not used for PRACH repetition transmission. The network side device does not need to receive the repeatedly transmitted PRACH in the first RO associated with the first common RO.

b. If a first common RO of the common RO is valid but is not used in PRACH repetition transmission, determine that the first RO associated with the first common RO is not used for receiving the repeatedly transmitted PRACH.

In this embodiment, a part of common ROs in the configured resource may be valid, but due to conflicting with another resource or being configured as unavailable, the valid common RO is not used in actual PRACH repetition transmission. The first RO associated with the common RO is not used for actual first PRACH repetition transmission. Therefore, the first RO associated with the first common RO is not used for receiving the repeatedly transmitted PRACH.

c. If a first common RO of the common RO is invalid, determine that the first RO associated with the first common RO is used for receiving the repeatedly transmitted PRACH.

In this embodiment, if the first common RO is invalid, the first RO associated with the first common RO is still used for PRACH repetition transmission. Therefore, the first RO associated with the first common RO is still used for receiving the repeatedly transmitted PRACH.

d. If a first common RO of the common RO is valid but is not used in PRACH repetition transmission, determine that the first RO associated with the first common RO is used for receiving the repeatedly transmitted PRACH.

In this embodiment, if the first common RO is valid but is not actually used in PRACH repetition transmission, the first RO associated with the first common RO is still used for PRACH repetition transmission. Therefore, the first RO associated with the first common RO is still used for receiving the repeatedly transmitted PRACH.

In this embodiment, whether the configured resource is used for actual PRACH repetition transmission is determined based on the validity of the first RO and common RO. For example, when PRACH repetition conflicts with another resource, a part of PRACH repetitions may be discarded to ensure that another high-priority signal can be transmitted or received on time. Alternatively, to guarantee a quantity of actual PRACH repetitions, a PRACH occasion for repetition is postponed, and ROs that are invalid or do not actually transmit the PRACH are skipped. Alternatively, even if a resource for the first repetition is invalid or a PRACH is not actually transmitted, PRACH resources of subsequent repetitions may continue to transmit the remaining PRACH repetitions, thereby reducing a random access delay.

The following describes a specific implementation process of determining, based on the configuration information of the symbol where the configured resource is located, whether the configured resource is used for receiving the repeatedly transmitted PRACH.

In an optional embodiment, the determining, based on configuration information of a symbol where the configured resource is located, whether the configured resource is used for receiving the repeatedly transmitted PRACH includes at least one of the following.
(A) If a symbol where a third target RO of a first RO is located is configured as a flexible symbol in common TDD uplink and downlink configuration information and as downlink in dedicated TDD uplink and downlink configuration information, determine that the third target RO is not used for receiving the repeatedly transmitted PRACH. The first RO is an RO in the configured resource that is used only for PRACH repetition transmission.

In this embodiment, the third target RO is one or more of the first ROs that are used only for PRACH repetition transmission. If a symbol where an additionally configured RO (for example, the third target RO of the first ROs) used for PRACH repetition transmission is located is configured as a flexible symbol (flexible) in tdd-UL-DL-configurationCommon, and as DL in tdd-UL-DL-ConfigurationDedicated, the third target RO is not used for PRACH repetition transmission. Therefore, the network side device receives, on the third target RO, the repeatedly transmitted PRACH.

(B) If a symbol where a third target RO of a first RO is located is configured as a flexible symbol in common TDD uplink and downlink configuration information and as downlink in a DCI format, determine that the third target RO is not used for receiving the repeatedly transmitted PRACH.

In this embodiment, the DCI format may be DCI format2-0. If a symbol where an additionally configured RO (for example, the third target RO of the first ROs) used for PRACH repetition transmission is located is configured as flexible in tdd-UL-DL-configurationCommon, and is indicated as DL in DCI format2-0, the third target RO is not used for PRACH repetition transmission. Therefore, the third target RO is not used for receiving the repeatedly transmitted PRACH.

(C) If a symbol where a third target RO of a first RO is located is configured as a flexible symbol in first configuration information, and a terminal receives a downlink signal on the symbol, determine that the third target RO is not used for receiving the repeatedly transmitted PRACH. The first configuration information includes: at least one of the common TDD uplink and downlink configuration information, the dedicated TDD uplink and downlink configuration information, or the DCI format; and the first RO is an RO in the configured resource that is used only for PRACH repetition transmission.

In this embodiment, the downlink signal is, for example, a PDCCH or a PDSCH, and the DCI format is, for example, DCI format2-0. In other words, if a symbol where an additionally configured RO (for example, the third target RO of the first ROs) used for PRACH repetition transmission is located is configured as flexible in tdd-UL-DL-configurationCommon and/or tdd-UL-DL-ConfigurationDedicated and/or DCI format2-0, but the downlink signal is received on the foregoing symbol (that is, the symbol where the RO is located), then the third target RO is not used for PRACH repetition transmission. Therefore, the third target RO is not used for receiving the repeatedly transmitted PRACH.

In this embodiment, whether the configured resource is actually used for PRACH repetition transmission is determined based on the configuration information of the symbol where the configured resource is located, to provide the UE with a scheme for usage of transmission resources under different configurations, thereby guaranteeing the configured resource and reducing a random access delay.

The following describes an implementation process of determining, based on a conflict situation between the configured resource and another signal resource, whether the configured resource is actually used for PRACH repetition transmission.

In an optional embodiment, the determining, based on a conflict situation between the configured resource and another signal resource, whether the configured resource is used for receiving the repeatedly transmitted PRACH includes:
if a fourth target RO of a first RO at least partially overlaps a transmission resource of first uplink information in a random access procedure, determining that the fourth target RO is not used for receiving the repeatedly transmitted PRACH.

The fourth target RO may be one or more ROs of the first ROs that are used only for PRACH repetition transmission. The first uplink information may be MsgA in a random access procedure. To be specific, for an additionally configured RO (for example, the fourth target RO) used for PRACH repetition transmission, if the RO at least partially overlaps MsgA PUSCH transmission, the RO is not used for PRACH repetition transmission. Therefore, the RO is not used for receiving the repeatedly transmitted PRACH.

In this embodiment, a UE that does not support PRACH repetition may not read or recognize additionally configured ROs used for PRACH repetition transmission. This means that a MsgA PUSCH necessarily takes precedence over individual ROs configured for PRACH repetition, that is, the MsgA PUSCH takes precedence over transmission of a fourth target RO. In addition, when the fourth target RO overlaps a resource for the MsgA PUSCH, a part of PRACH repetitions is discarded to protect the MsgA PUSCH. This may not cause PRACH reception failure, but can ensure timely transmission of the MsgA PUSCH.

Optionally, if high layer signaling instructs the terminal to receive a downlink signal in a set of symbols within a slot, DCI format information indicates that the terminal performs PRACH repetition transmission in a fourth target RO, and the fourth target RO overlaps at least one symbol in a symbol set where the slot is located, the fourth target RO is not used for PRACH repetition transmission. If the high layer signaling notifies the network side device of indication information for the terminal, for example, the network side device is notified that the terminal receives the downlink signal within the symbol, then the network side device may determine, based on the DCI format information, that the fourth target RO is not used for receiving the repeatedly transmitted PRACH.

Optionally, if high layer signaling instructs the terminal to perform PRACH repetition transmission in a target symbol of a fourth target RO, and the DCI format information indicates that the terminal receives a downlink signal in a symbol subset of the target symbol, the fourth target RO is not used for PRACH repetition transmission. If the high layer signaling notifies the network side device of indication information for the terminal, for example, the network side device is notified that the terminal performs PRACH repetition transmission in the target symbol on the fourth target RO, then the network side device may determine, based on the DCI format information, that the fourth target RO is not used for receiving the repeatedly transmitted PRACH.

In this embodiment, whether the configured resource is used for PRACH repetition transmission is determined based on a conflict situation between the configured resource and another signal resource. When PRACH repetition conflicts with another resource, a part of PRACH repetitions may be discarded to ensure that another high-priority signal can be transmitted or received on time.

Optionally, the network side device may further determine a power allocation priority of the PRACH repetition transmission. The power allocation priority includes at least one of the following:
(1) A power allocation priority of PRACH repetition transmission is lower than a power allocation priority of PRACH transmission without repetition on a primary cell (PCell).
(2) A power allocation priority of PRACH repetition transmission is the same as a power allocation priority of PRACH transmission without repetition on a primary cell.
(3) If the PRACH repetition transmission is performed on a primary cell, the power allocation priority of the PRACH repetition transmission is the same as a power allocation priority of PRACH transmission without repetition on the primary cell.
(4) If the PRACH repetition transmission is performed on a non-primary cell, the power allocation priority of the PRACH repetition transmission is the same as a power allocation priority of PRACH transmission without repetition on the non-primary cell.
(5) A power allocation priority of PRACH repetition transmission is the same as a power allocation priority of PRACH transmission without repetition on a non-primary cell.

In this embodiment, the power allocation priority of the PRACH repetition transmission is defined to ensure that a signal with high priority can be transmitted or received on time, so as to ensure normal signal transmission.

Optionally, reception of the repeatedly transmitted PRACH is completed within first duration; and
The first duration includes at least one of the following:
M times an SSB-to-RO mapping cycle;
N times an SSB-to-RO mapping association period;
L times an SSB-to-RO association pattern period;
a time value corresponding to a random access response window; or
an SSB to PRACH repetition transmission RO association pattern period, where the SSB to PRACH repetition transmission RO association pattern period may be additionally configured for the PRACH repetition transmission, and
M, N, and L are positive integers. Specific values of M, N, and L may be defined by a protocol or configured by a system message.

In this embodiment, the SSB to PRACH repetition transmission RO association pattern period is additionally defined, and may include one or more SSB-to-RO association pattern periods. The pattern between the PRACH repetition RO and the SSB can be repeated at most every predetermined time period (for example, every 640 ms). Optionally, the predetermined time period may be a positive integer multiple of the SSB to PRACH (existing and transmitted each time) RO association pattern period.

Optionally, the method further includes: sending, to a terminal, resource configuration information for the PRACH repetition transmission, where the resource configuration information indicates the configured resource.

In this embodiment, after configuring the configured resource for PRACH repetition transmission, the network side device may send the configured resource to the terminal through the resource configuration information.

In embodiments of this application, the network side device configures a resource for PRACH repetition transmission, and determines whether the configured resource is actually used for PRACH repetition transmission, so that the network side device can receive a repeatedly transmitted PRACH on the configured resource actually used for PRACH repetition transmission, thereby reducing a random access delay. Embodiments of this application provide a solution when the configured resource is invalid or conflicts with another signal resource. For example, when PRACH repetitions conflict with another resource, a part of PRACH repetitions may be discarded or transmission power may not be increased, to ensure that another high-priority signal can be transmitted or received on time. Alternatively, to guarantee a quantity of actual PRACH repetitions, a PRACH occasion for repetition needs to be postponed, and ROs that are invalid or do not actually transmit the PRACH are skipped. Alternatively, even if a resource for the first repetition is invalid or a PRACH is not actually transmitted, PRACH resources of subsequent repetitions may continue to transmit the remaining PRACH repetitions, thereby reducing a random access delay.

The method for determining a PRACH repetition transmission resource provided in embodiments of this application may performed by an apparatus for determining a PRACH repetition transmission resource. An example in which the apparatus for determining a PRACH repetition transmission resource performs the method for determining a PRACH repetition transmission resource is used in an embodiment of this application to describe the apparatus for determining a PRACH repetition transmission resource provided in embodiments of this application.

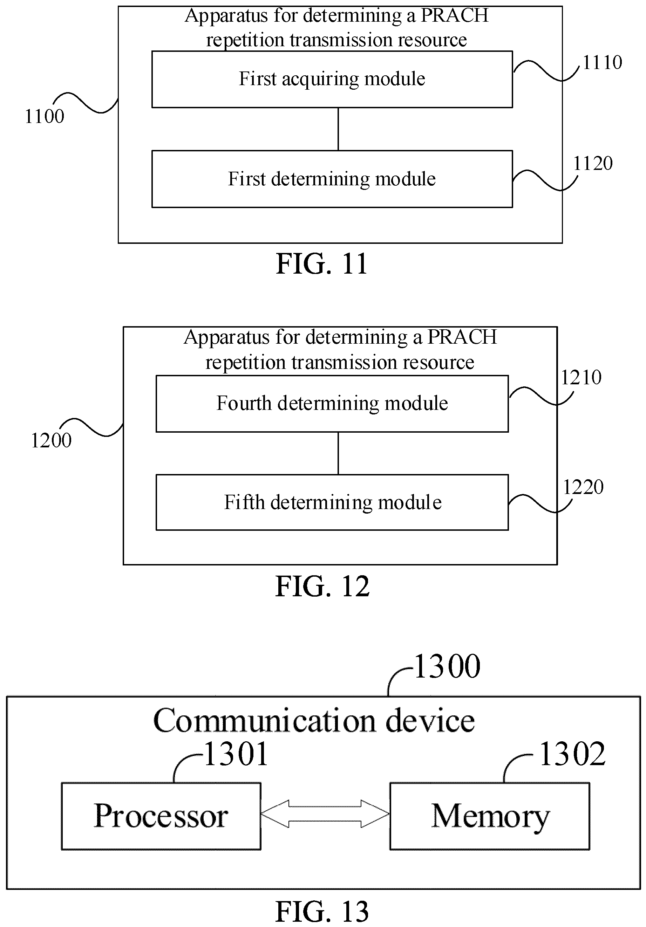

As shown in FIG. 11, an embodiment of this application provides an apparatus 1100 for determining a PRACH repetition transmission resource, applied to a terminal, and including:
a first acquiring module 1110, configured to acquire resource configuration information for physical random access channel PRACH repetition transmission, where the resource configuration information indicates a configured resource for the PRACH repetition transmission; and
a first determining module 1120, configured to determine whether the configured resource is used for PRACH repetition transmission.

Optionally, the first determining module includes at least one of the following:
a first determining unit, configured to determine, based on validity of the configured resource, whether the configured resource is used for PRACH repetition transmission;
a second determining unit, configured to determine, based on configuration information of a symbol where the configured resource is located, whether the configured resource is used for PRACH repetition transmission; or
a third determining unit, configured to determine, based on a conflict situation between the configured resource and another signal resource, whether the configured resource is used for PRACH repetition transmission.

Optionally, the apparatus further includes:
a second determining module, configured to determine the validity of the configured resource, where
the validity of the configured resource is related to a first gap requirement and/or time division duplex TDD uplink and downlink configuration; and
the first gap requirement is a timing gap requirement among SSB transmission, a symbol set used for SSB transmission, and a symbol set used for PRACH transmission.

Optionally, the first determining unit includes at least one of the following:
a first determining subunit, configured to determine, based on validity of a first RO in the configured resource, whether the first RO is used for PRACH repetition transmission; or
a second determining subunit, configured to determine, based on validity of a common RO in the configured resource, whether a first RO in the configured resource is used for PRACH repetition transmission, where
the common RO is a commonly configured RO used for the PRACH repetition transmission and PRACH transmission without repetition; and the first RO is an RO used only for PRACH repetition transmission.

Optionally, the first determining subunit is specifically configured to:
if a first target RO of the first RO is invalid, determine that the first target RO is not used for PRACH repetition transmission.

Optionally, the apparatus further includes:
a first processing module, configured to postpone a time domain position of the first target RO by one RO to obtain a second target RO, where the second target RO is used for PRACH repetition transmission.

Optionally, the first target RO is counted in a quantity of ROs for the PRACH repetition transmission.

Optionally, the second determining subunit is specifically configured to perform at least one of the following operations:
if a first common RO of the common RO is invalid, determining that the first RO associated with the first common RO is not used for PRACH repetition transmission;
if a first common RO of the common RO is valid but is not used in PRACH repetition transmission, determining that the first RO associated with the first common RO is not used for PRACH repetition transmission;
if a first common RO of the common RO is invalid, determining that the first RO associated with the first common RO is used for PRACH repetition transmission; or
if a first common RO of the common RO is valid but is not used in PRACH repetition transmission, determining that the first RO associated with the first common RO is used for PRACH repetition transmission.

Optionally, the second determining unit is configured to perform at least one of the following operations:
if a symbol where a third target RO of a first RO is located is configured as a flexible symbol in common TDD uplink and downlink configuration information and as downlink in dedicated TDD uplink and downlink configuration information, determining that the third target RO is not used for PRACH repetition transmission;
if a symbol where a third target RO of a first RO is located is configured as a flexible symbol in common TDD uplink and downlink configuration information and as downlink in a DCI format, determining that the third target RO is not used for PRACH repetition transmission; or
if a symbol where a third target RO of a first RO is located is configured as a flexible symbol in first configuration information, and the terminal receives a downlink signal on the symbol, determining that the third target RO is not used for PRACH repetition transmission. The first configuration information includes: at least one of the common TDD uplink and downlink configuration information, the dedicated TDD uplink and downlink configuration information, or the DCI format; and
the first RO is an RO in the configured resource that is used only for PRACH repetition transmission.

Optionally, the third determining unit is configured to perform at least one of the following operations:
if a fourth target RO of a first RO at least partially overlaps a transmission resource of first uplink information in a random access procedure, determining that the fourth target RO is not used for PRACH repetition transmission, where the first RO is an RO in the configured resource that is used only for PRACH repetition transmission;
if high layer signaling instructs the terminal to receive a downlink signal in a set of symbols within a slot, DCI format information indicates that the terminal performs PRACH repetition transmission in a fourth target RO, and the fourth target RO overlaps at least one symbol in a symbol set where the slot is located, determining that the fourth target RO is not used for PRACH repetition transmission; or
if high layer signaling instructs the terminal to perform PRACH repetition transmission in a target symbol of a fourth target RO, and the DCI format information indicates that the terminal receives a downlink signal in a symbol subset of the target symbol, determining that the fourth target RO is not used for PRACH repetition transmission.

Optionally, the apparatus further includes:
a third determining module, configured to determine a power allocation priority of the PRACH repetition transmission.

The power allocation priority includes at least one of the following:
a power allocation priority of PRACH repetition transmission is lower than a power allocation priority of PRACH transmission without repetition on a primary cell;
a power allocation priority of PRACH repetition transmission is the same as a power allocation priority of PRACH transmission without repetition on a primary cell;
if the PRACH repetition transmission is performed on a primary cell, the power allocation priority of the PRACH repetition transmission is the same as a power allocation priority of PRACH transmission without repetition on the primary cell;
if the PRACH repetition transmission is performed on a non-primary cell, the power allocation priority of the PRACH repetition transmission is the same as a power allocation priority of PRACH transmission without repetition on the non-primary cell; or
a power allocation priority of PRACH repetition transmission is the same as a power allocation priority of PRACH transmission without repetition on a non-primary cell.

Optionally, the PRACH repetition transmission is completed within first duration.

The first duration includes at least one of the following:
M times an SSB-to-RO mapping cycle;
N times an SSB-to-RO mapping association period;
L times an SSB-to-RO association pattern period;
a time value corresponding to a random access response window; or
an SSB to PRACH repetition transmission RO association pattern period, where
M, N, and L are positive integers.

In embodiments of this application, the terminal obtains the configured resource for PRACH repetition transmission, and determines whether the configured resource is actually used for PRACH repetition transmission, to provide a solution when the configuration resource is invalid or conflicts with another signal resource, thereby reducing a random access delay.

It should be noted that the apparatus for determining a PRACH repetition transmission resource provided in this embodiment of this application can implement processes implemented in the foregoing method embodiments in FIG. 4 to FIG. 9 and achieve the same technical effects. To avoid repetition, details are not described herein again.

As shown in FIG. 12, an embodiment of this application provides an apparatus 1200 for determining a PRACH repetition transmission resource, applied to a network side device, and including:
a fourth determining module 1210, configured to determine a configured resource for PRACH repetition transmission; and
a fifth determining module 1220, configured to determine whether the configured resource is used for receiving a repeatedly transmitted PRACH.

Optionally, the fifth determining module includes:
a fourth determining unit, configured to determine, based on validity of the configured resource, whether the configured resource is used for receiving the repeatedly transmitted PRACH;
a fifth determining unit, configured to determine, based on configuration information of a symbol where the configured resource is located, whether the configured resource is used for receiving the repeatedly transmitted PRACH; and
a sixth determining unit, configured to determine, based on a conflict situation between the configured resource and another signal resource, whether the configured resource is used for receiving the repeatedly transmitted PRACH.

Optionally, the apparatus further includes:
a sixth determining module, configured to determine the validity of the configured resource, where
the validity of the configured resource is related to a first gap requirement and/or time division duplex TDD uplink and downlink configuration; and
the first gap requirement is a timing gap requirement among synchronization signal and PBCH block SSB transmission, a symbol set used for SSB transmission, and a symbol set used for PRACH transmission.

Optionally, the fourth determining unit includes at least one of the following:
a third determining subunit, configured to determine, based on validity of a first RO in the configured resource, whether the configured resource is used for receiving the repeatedly transmitted PRACH; or
a fourth determining subunit, configured to determine, based on validity of a common RO in the configured resource, whether the configured resource is used for receiving the repeatedly transmitted PRACH.

The common RO is a commonly configured RO used for the PRACH repetition transmission and PRACH transmission without repetition. The first RO is an RO used only for PRACH repetition transmission.

Optionally, the third determining subunit is specifically configured to:
if a first target RO of the first RO is invalid, determine that the first target RO is not used for receiving the repeatedly transmitted PRACH.

Optionally, the apparatus further includes:
a seventh determining module, configured to determine a time domain position of a second target RO, where the second target RO is obtained by postponing a time domain position of the first target RO by one RO, and the second target RO is used for receiving the repeatedly transmitted PRACH.

Optionally, the fourth determining subunit is configured to perform at least one of the following operations:
if a first common RO of the common RO is invalid, determining that the first RO associated with the first common RO is not used for receiving the repeatedly transmitted PRACH;
if a first common RO of the common RO is valid but is not used in PRACH repetition transmission, determining that the first RO associated with the first common RO is not used for receiving the repeatedly transmitted PRACH;
if a first common RO of the common RO is invalid, determining that the first RO associated with the first common RO is used for receiving the repeatedly transmitted PRACH; or
if a first common RO of the common RO is valid but is not used in PRACH repetition transmission, determining that the first RO associated with the first common RO is used for receiving the repeatedly transmitted PRACH.

Optionally, the fifth determining unit is configured to perform at least one of the following operations:
if a symbol where a third target RO of a first RO is located is configured as a flexible symbol in common TDD uplink and downlink configuration information and as downlink in dedicated TDD uplink and downlink configuration information, determining that the third target RO is not used for receiving the repeatedly transmitted PRACH;
if a symbol where a third target RO of a first RO is located is configured as a flexible symbol in common TDD uplink and downlink configuration information and as downlink in a DCI format, determining that the third target RO is not used for receiving the repeatedly transmitted PRACH; or
if a symbol where a third target RO of a first RO is located is configured as a flexible symbol in first configuration information, and a terminal receives a downlink signal on the symbol, determining that the third target RO is not used for receiving the repeatedly transmitted PRACH. The first configuration information includes: at least one of the common TDD uplink and downlink configuration information, the dedicated TDD uplink and downlink configuration information, or the DCI format.

The first RO is an RO in the configured resource that is used only for PRACH repetition transmission.

Optionally, the sixth determining unit is configured to:
if a fourth target RO of a first RO at least partially overlaps a transmission resource of first uplink information in a random access procedure, determine that the fourth target RO is not used for receiving the repeatedly transmitted PRACH.

Optionally, reception of the repeatedly transmitted PRACH is completed within first duration; and
The first duration includes at least one of the following:
M times an SSB-to-RO mapping cycle;
N times an SSB-to-RO mapping association period;
L times an SSB-to-RO association pattern period;
a time value corresponding to a random access response window; or
an SSB to PRACH repetition transmission RO association pattern period, where
M, N, and L are positive integers.

Optionally, the apparatus further includes:
a first sending module, configured to send, to a terminal, resource configuration information for the PRACH repetition transmission, where the resource configuration information indicates the configured resource.

In embodiments of this application, the network side device configures a resource for PRACH repetition transmission, and determines whether the configured resource is actually used for PRACH repetition transmission, so that the network side device can receive a repeatedly transmitted PRACH on the configured resource actually used for PRACH repetition transmission, thereby reducing a random access delay.

It should be noted that the apparatus for determining a PRACH repetition transmission resource provided in this embodiment of this application can implement processes implemented in the foregoing method embodiment in FIG. 10 and achieve the same technical effects. To avoid repetition, details are not described herein again.

The apparatus for determining a PRACH repetition transmission resource in embodiments of this application may be an electronic device, for example, an electronic device having an operating system, or may be a component in an electronic device, for example, an integrated circuit or a chip. The electronic device may be a terminal, or may be another device other than a terminal. For example, the terminal may include but is not limited to a type of the terminal 11 listed above, and the another device may be a server, a network attached storage (Network Attached Storage, NAS), or the like. This is not specifically limited in this embodiment of this application.

Optionally, as shown in FIG. 13, an embodiment of this application further provides a communication device 1300, including a processor 1301 and a memory 1302. The memory 1302 stores a program or instructions executable on the processor 1301. For example, in a case that the communication device 1300 is a terminal, the program or the instructions, when executed by the processor 1301, implement steps in the foregoing method embodiments applied in a terminal, and achieve the same technical effects. In a case that the communication device 1300 is a network side device, the program or instructions, when executed by the processor 1301, implement steps in the foregoing method embodiments applied to a network side device, and achieve the same technical effects. To avoid repetition, details are not described herein again.

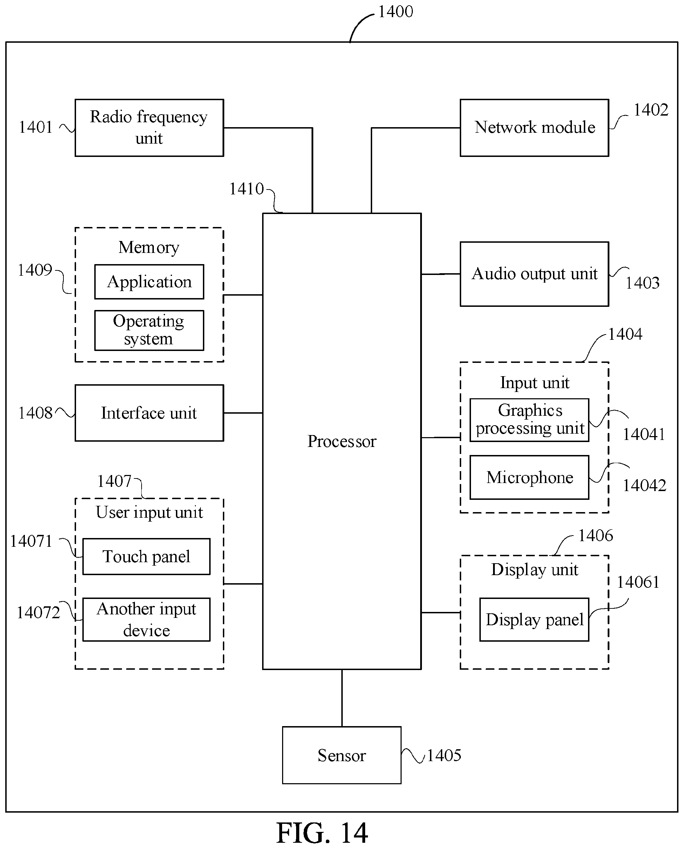

An embodiment of this application further provides a terminal, including a processor and a communication interface. The processor is configured to: acquire resource configuration information for physical random access channel PRACH repetition transmission, where the resource configuration information indicates a configured resource for the PRACH repetition transmission; and determine whether the configured resource is used for PRACH repetition transmission. The terminal embodiment corresponds to the foregoing terminal side method embodiment. Implementation processes and implementation methods of the foregoing method embodiments may all be applied to the terminal embodiment, and the same technical effects can be achieved. Specifically, FIG. 14 is a schematic diagram of a hardware structure of a terminal for implementing this embodiment of this application.

The terminal 1400 includes but is not limited to at least some components such as a radio frequency unit 1401, a network module 1402, an audio output unit 1403, an input unit 1404, a sensor 1405, a display unit 1406, a user input unit 1407, an interface unit 1408, a memory 1409, and a processor 1410.

A person skilled in the art may understand that the terminal 1400 may further include a power supply (for example, a battery) supplying power to components. The power supply may be logically connected to the processor 1410 via a power supply management system, to implement functions such as charge management, discharge management, and power consumption management by using the power supply management system. The terminal structure shown in FIG. 14 does not constitute a limitation on the terminal. The terminal may include more or fewer components than those shown in the figure, or some components are combined, or component arrangements are different. Details are not described herein again.

It should be understood that in this embodiment of this application, the input unit 1404 may include a graphics processing unit (Graphics Processing Unit, GPU) 14041 and a microphone 14042. The graphics processing unit 14041 processes image data of a still picture or video obtained by an image capture apparatus (such as a camera) in a video capture mode or an image capture mode. The display unit 1406 may include a display panel 14061, and the display panel 14061 may be configured in a form of a liquid crystal display, an organic light-emitting diode, or the like. The user input unit 1407 includes at least one of a touch panel 14071 and another input device 14072. The touch panel 14071 is also referred to as a touchscreen. The touch panel 14071 may include two parts: a touch detection apparatus and a touch controller. The another input device 14072 may include but are not limited to a physical keyboard, a function key (such as a volume control key or a switch key), a trackball, a mouse, and a joystick. Details are not described herein again.

In this embodiment of this application, after receiving downlink data from a network side device, the radio frequency unit 1401 may transmit the downlink data to the processor 1410 for processing. In addition, the radio frequency unit 1401 may send uplink data to the network side device. Generally, the radio frequency unit 1401 includes but is not limited to an antenna, an amplifier, a transceiver, a coupler, a low noise amplifier, a duplexer, and the like.

The memory 1409 may be configured to store software programs or instructions and various data. The memory 1409 may mainly include a first storage area for storing the programs or the instructions and a second storage area for storing the data. The first storage area may store an operating system, an application or instructions (such as an audio play function and an image play function) required by at least one function, and the like. In addition, the memory 1409 may include a volatile memory or a non-volatile memory. Alternatively, the memory 1409 may include both volatile and non-volatile memories. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synch link dynamic random access memory (Synch link DRAM, SLDRAM), and a direct rambus random access memory (Direct Rambus RAM, DRRAM). The memory 1409 in this embodiment of this application includes but is not limited to these and any other suitable types of memories.

The processor 1410 may include one or more processing units. Optionally, the processor 1410 integrates an application processor and a modem processor. The application processor mainly processes operations related to the operating system, a user interface, an application, and the like. The modem processor mainly processes wireless communication signals. For example, the modem processor is a baseband processor. It may be understood that the foregoing modem processor may alternatively be not integrated in the processor 1410.

The processor 1410 is configured to: acquire resource configuration information for physical random access channel PRACH repetition transmission, where the resource configuration information indicates a configured resource for the PRACH repetition transmission; and determine whether the configured resource is used for PRACH repetition transmission.

In embodiments of this application, the terminal obtains the configured resource for PRACH repetition transmission, and determines whether the configured resource is actually used for PRACH repetition transmission, so that the terminal performs PRACH repetition transmission by using a configured resource that can actually be used for PRACH repetition transmission, thereby reducing a random access delay.

Optionally, the processor 1410 is further configured to perform at least one of the following operations:
determining, based on validity of the configured resource, whether the configured resource is used for PRACH repetition transmission;
determining, based on configuration information of a symbol where the configured resource is located, whether the configured resource is used for PRACH repetition transmission; or
determining, based on a conflict situation between the configured resource and another signal resource, whether the configured resource is used for PRACH repetition transmission.

Optionally, the processor 1410 is further configured to: determine the validity of the configured resource, where
the validity of the configured resource is related to a first gap requirement and/or time division duplex TDD uplink and downlink configuration; and
the first gap requirement is a timing gap requirement among synchronization signal and PBCH block SSB transmission, a symbol set used for SSB transmission, and a symbol set used for PRACH transmission.

Optionally, the processor 1410 is further configured to perform at least one of the following operations:
determining, based on validity of a first RO in the configured resource, whether the first RO is used for PRACH repetition transmission; or
determining, based on validity of a common RO in the configured resource, whether a first RO in the configured resource is used for PRACH repetition transmission.

The common RO is a commonly configured RO used for the PRACH repetition transmission and PRACH transmission without repetition. The first RO is an RO used only for PRACH repetition transmission.

Optionally, the processor 1410 is further configured to: if a first target RO of the first RO is invalid, determine that the first target RO is not used for PRACH repetition transmission.

Optionally, the processor 1410 is further configured to: postpone a time domain position of the first target RO by one RO to obtain a second target RO, where the second target RO is used for PRACH repetition transmission.

Optionally, the first target RO is counted in a quantity of ROs for the PRACH repetition transmission.

Optionally, the processor 1410 is further configured to perform at least one of the following operations:
if a first common RO of the common RO is invalid, determining that the first RO associated with the first common RO is not used for PRACH repetition transmission;
if a first common RO of the common RO is valid but is not used in PRACH repetition transmission, determining that the first RO associated with the first common RO is not used for PRACH repetition transmission;
if a first common RO of the common RO is invalid, determining that the first RO associated with the first common RO is used for PRACH repetition transmission; or
if a first common RO of the common RO is valid but is not used in PRACH repetition transmission, determining that the first RO associated with the first common RO is used for PRACH repetition transmission.

Optionally, the processor 1410 is further configured to perform at least one of the following operations:
if a symbol where a third target RO of a first RO is located is configured as a flexible symbol in common TDD uplink and downlink configuration information and as downlink in dedicated TDD uplink and downlink configuration information, determining that the third target RO is not used for PRACH repetition transmission;
if a symbol where a third target RO of a first RO is located is configured as a flexible symbol in common TDD uplink and downlink configuration information and as downlink in a DCI format, determining that the third target RO is not used for PRACH repetition transmission; or
if a symbol where a third target RO of a first RO is located is configured as a flexible symbol in first configuration information, and the terminal receives a downlink signal on the symbol, determining that the third target RO is not used for PRACH repetition transmission, where the first configuration information includes: at least one of the common TDD uplink and downlink configuration information, the dedicated TDD uplink and downlink configuration information, or the DCI format; and
the first RO is an RO in the configured resource that is used only for PRACH repetition transmission.

Optionally, the processor 1410 is further configured to perform at least one of the following operations:
if a fourth target RO of a first RO at least partially overlaps a transmission resource of first uplink information in a random access procedure, determining that the fourth target RO is not used for PRACH repetition transmission, where the first RO is an RO in the configured resource that is used only for PRACH repetition transmission;
if high layer signaling instructs the terminal to receive a downlink signal in a set of symbols within a slot, DCI format information indicates that the terminal performs PRACH repetition transmission in a fourth target RO, and the fourth target RO overlaps at least one symbol in a symbol set where the slot is located, determining that the fourth target RO is not used for PRACH repetition transmission; or
if high layer signaling instructs the terminal to perform PRACH repetition transmission in a target symbol of a fourth target RO, and the DCI format information indicates that the terminal receives a downlink signal in a symbol subset of the target symbol, determining that the fourth target RO is not used for PRACH repetition transmission.

Optionally, the processor 1410 is further configured to: determine a power allocation priority of the PRACH repetition transmission.

The power allocation priority includes at least one of the following:
a power allocation priority of PRACH repetition transmission is lower than a power allocation priority of PRACH transmission without repetition on a primary cell;
a power allocation priority of PRACH repetition transmission is the same as a power allocation priority of PRACH transmission without repetition on a primary cell;
if the PRACH repetition transmission is performed on a primary cell, the power allocation priority of the PRACH repetition transmission is the same as a power allocation priority of PRACH transmission without repetition on the primary cell;
if the PRACH repetition transmission is performed on a non-primary cell, the power allocation priority of the PRACH repetition transmission is the same as a power allocation priority of PRACH transmission without repetition on the non-primary cell; or
a power allocation priority of PRACH repetition transmission is the same as a power allocation priority of PRACH transmission without repetition on a non-primary cell.

Optionally, the PRACH repetition transmission is completed within first duration.

The first duration includes at least one of the following:
M times an SSB-to-RO mapping cycle;
N times an SSB-to-RO mapping association period;
L times an SSB-to-RO association pattern period;
a time value corresponding to a random access response window; or
an SSB to PRACH repetition transmission RO association pattern period, where
M, N, and L are positive integers.

In embodiments of this application, the terminal obtains the configured resource for PRACH repetition transmission, and determines whether the configured resource is actually used for PRACH repetition transmission, so that the terminal performs PRACH repetition transmission by using a configured resource that can actually be used for PRACH repetition transmission, thereby reducing a random access delay.

An embodiment of this application further provides a network side device, including a processor and a communication interface. The processor is configured to determine a configured resource for PRACH repetition transmission; and determine whether the configured resource is used for receiving a repeatedly transmitted PRACH. The network side device embodiment corresponds to the foregoing method embodiments. Both implementation processes and implementations of the foregoing method embodiments are applicable to the network side device embodiment, and the same technical effects can be achieved.

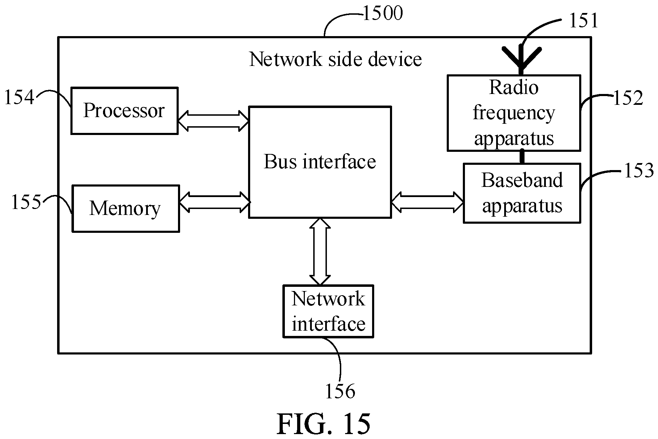

Specifically, an embodiment of this application further provides a network side device. As shown in FIG. 15, a network side device 1500 includes: an antenna 151, a radio frequency apparatus 152, a baseband apparatus 153, a processor 154, and a memory 155. The antenna 151 is connected to the radio frequency apparatus 152. In an uplink direction, the radio frequency apparatus 152 receives information through the antenna 151, and sends the received information to the baseband apparatus 153 for processing. In a downlink direction, the baseband apparatus 153 processes information to be sent, and sends the processed information to the radio frequency apparatus 152. The radio frequency apparatus 152 processes the received information and then sends the processed information out through the antenna 151.

The method performed by the network side device in the foregoing embodiments may be implemented in the baseband apparatus 153. The baseband apparatus 153 includes a baseband processor.

The baseband apparatus 153 may include, for example, at least one baseband board. A plurality of chips are provided on the baseband board. As shown in FIG. 15, one of the chips is, for example, a baseband processor, and is connected to the memory 155 through a bus interface to call a program in the memory 155 so as to perform network device operations described in the foregoing method embodiments.

The network side device may further include a network interface 156. The interface is, for example, a common public radio interface (common public radio interface, CPRI).

Specifically, the network side device 1500 in this embodiment of this application further includes: instructions or a program stored on the memory 155 and executable on the processor 154. The processor 154 calls the instructions or program in the memory 155 to execute the method executed by modules shown in FIG. 12, and achieve the same technical effects. To avoid repetition, details are not described herein again.

An embodiment of this application further provide a readable storage medium. The readable storage medium stores a program or instructions. The program or the instructions, when executed by a processor, implement processes in the foregoing embodiments of the method for determining a PRACH repetition transmission resource, and achieve the same technical effects. To avoid repetition, details are not described herein again.

The processor is the processor in the terminal in the foregoing embodiments. The readable storage medium includes a computer-readable storage medium, for example, a computer read-only memory ROM, a random access memory RAM, a magnetic disk, or an optical disc.

An embodiment of this application further provides a chip, including a processor and a communication interface. The communication interface is coupled to the processor. The processor is configured to run a program or instructions to implement processes in the foregoing embodiments of the method for determining a PRACH repetition transmission resource, and achieve the same technical effects. To avoid repetition, details are not described herein again.

It should be understood that the chip mentioned in this embodiment of this application may also be referred to as a system-on-chip, a system chip, a chip system, a system-on-a-chip, or the like.

An embodiment of this application further provides a computer program/a program product. The computer program/the program product is stored in a storage medium. The computer program/the program product is executed by at least one processor to implement processes in the foregoing embodiments of the method for determining a PRACH repetition transmission resource, and achieve the same technical effects. To avoid repetition, details are not described herein again.

An embodiment of this application further provides an apparatus for determining a PRACH repetition transmission resource, including: a terminal and a network side device. The terminal may be configured to perform steps of the method for determining a PRACH repetition transmission resource applied to a terminal. The network side device may be configured to perform steps of the method for determining a PRACH repetition transmission resource applied to a network side device.

It should be noted that, in the specification, the terms "include", "comprise", or any other variation thereof in this specification is intended to cover a non-exclusive inclusion. Therefore, processes, methods, objects, or apparatuses including a series of elements further includes, other than those listed, elements that are not listed or that are inherent to the processes, methods, objects, or apparatuses. Without more limitations, elements defined by the expression "including one" does not exclude that there are still other same elements in the processes, methods, objects, or apparatuses. In addition, it should be noted that the method and apparatus in embodiments of this application is not limited to performing functions in the order shown or discussed, but performing functions in a substantially simultaneous manner or in reverse order, depending on the functions, also falls within the scope thereof. For example, the described method may be performed in an order different from that described, and various steps may be added, omitted, or combined. Additionally, features described in some examples may be combined in other examples.

According to the descriptions in the foregoing implementations, a person skilled in the art may clearly learn that the method according to the foregoing embodiments may be implemented by relying on software and a commodity hardware platform or by using hardware. In many cases, the former is preferred during implementation. Based on such an understanding, the technical solutions of this application essentially, or the part contributing to the conventional technologies, may be presented in the form of a computer software product. The computer software product is stored in a storage medium (for example, a ROM/RAM, a magnetic disk, or an optical disc) including a plurality of instructions to enable a terminal (which may be a mobile phone, a computer, a server, an air conditioner, a network device, or the like) to perform the method according to embodiments of this application.

Embodiments of this application have been described above with reference to the accompanying drawings. However, this application is not limited to the foregoing specific implementations, and the foregoing specific implementations are merely examples and are not restrictive. A person of ordinary skill in the art may make various variations under the teaching of this application without departing from aims and the protection scope of the claims of this application, all of which fall within the protection scope of this application.

## Claims

1. A method for determining a PRACH repetition transmission resource, comprising:
a terminal acquires resource configuration information for physical random access channel PRACH repetition transmission, wherein the resource configuration information indicates a configured resource for the PRACH repetition transmission; and
the terminal determines whether the configured resource is used for PRACH repetition transmission.

2. The method according to claim 1, wherein the determining whether the configured resource is used for PRACH repetition transmission comprises at least one of the following:
determining, based on validity of the configured resource, whether the configured resource is used for PRACH repetition transmission;
determining, based on configuration information of a symbol where the configured resource is located, whether the configured resource is used for PRACH repetition transmission; or
determining, based on a conflict situation between the configured resource and another signal resource, whether the configured resource is used for PRACH repetition transmission.

3. The method according to claim 2, wherein the method further comprises:
determining the validity of the configured resource, wherein
the validity of the configured resource is related to a first gap requirement and/or time division duplex TDD uplink and downlink configuration; and
the first gap requirement is a timing gap requirement among synchronization signal and PBCH block SSB transmission, a symbol set used for SSB transmission, and a symbol set used for PRACH transmission.

4. The method according to claim 2, wherein the determining, based on validity of the configured resource, whether the configured resource is used for PRACH repetition transmission comprises at least one of the following:
determining, based on validity of a first RO in the configured resource, whether the first RO is used for PRACH repetition transmission; or
determining, based on validity of a common RO in the configured resource, whether a first RO in the configured resource is used for PRACH repetition transmission, wherein
the common RO is a commonly configured RO used for the PRACH repetition transmission and PRACH transmission without repetition; and the first RO is an RO used only for PRACH repetition transmission.

5. The method according to claim 4, wherein the determining, based on validity of a first RO in the configured resource, whether the first RO is used for PRACH repetition transmission comprises:
if a first target RO of the first RO is invalid, determining that the first target RO is not used for PRACH repetition transmission.

6. The method according to claim 5, wherein the method further comprises:
postponing a time domain position of the first target RO by one RO to obtain a second target RO, wherein the second target RO is used for PRACH repetition transmission.

7. The method according to claim 5, wherein the first target RO is counted in a quantity of ROs for the PRACH repetition transmission.

8. The method according to claim 4, wherein the determining, based on validity of a common RO in the configured resource, whether a first RO in the configured resource is used for PRACH repetition transmission comprises at least one of the following:
if a first common RO of the common RO is invalid, determining that the first RO associated with the first common RO is not used for PRACH repetition transmission;
if a first common RO of the common RO is valid but is not used in PRACH repetition transmission, determining that the first RO associated with the first common RO is not used for PRACH repetition transmission;
if a first common RO of the common RO is invalid, determining that the first RO associated with the first common RO is used for PRACH repetition transmission; or
if a first common RO of the common RO is valid but is not used in PRACH repetition transmission, determining that the first RO associated with the first common RO is used for PRACH repetition transmission.

9. The method according to claim 2, wherein the determining, based on configuration information of a symbol where the configured resource is located, whether the configured resource is used for PRACH repetition transmission comprises at least one of the following:
if a symbol where a third target RO of a first RO is located is configured as a flexible symbol in common TDD uplink and downlink configuration information and as downlink in dedicated TDD uplink and downlink configuration information, determining that the third target RO is not used for PRACH repetition transmission;
if a symbol where a third target RO of a first RO is located is configured as a flexible symbol in common TDD uplink and downlink configuration information and as downlink in a DCI format, determining that the third target RO is not used for PRACH repetition transmission; or
if a symbol where a third target RO of a first RO is located is configured as a flexible symbol in first configuration information, and the terminal receives a downlink signal on the symbol, determining that the third target RO is not used for PRACH repetition transmission, wherein the first configuration information comprises: at least one of the common TDD uplink and downlink configuration information, the dedicated TDD uplink and downlink configuration information, or the DCI format; and
the first RO is an RO in the configured resource that is used only for PRACH repetition transmission.

10. The method according to claim 2, wherein the determining, based on a conflict situation between the configured resource and another signal resource, whether the configured resource is used for PRACH repetition transmission comprises at least one of the following:
if a fourth target RO of a first RO at least partially overlaps a transmission resource of first uplink information in a random access procedure, determining that the fourth target RO is not used for PRACH repetition transmission, wherein the first RO is an RO in the configured resource that is used only for PRACH repetition transmission;
if high layer signaling instructs the terminal to receive a downlink signal in a set of symbols within a slot, DCI format information indicates that the terminal performs PRACH repetition transmission in a fourth target RO, and the fourth target RO overlaps at least one symbol in a symbol set where the slot is located, determining that the fourth target RO is not used for PRACH repetition transmission; or
if high layer signaling instructs the terminal to perform PRACH repetition transmission in a target symbol of a fourth target RO, and the DCI format information indicates that the terminal receives a downlink signal in a symbol subset of the target symbol, determining that the fourth target RO is not used for PRACH repetition transmission.

11. The method according to claim 1, wherein the method further comprises:
determining a power allocation priority of the PRACH repetition transmission, wherein
the power allocation priority comprises at least one of the following:
a power allocation priority of PRACH repetition transmission is lower than a power allocation priority of PRACH transmission without repetition on a primary cell;
a power allocation priority of PRACH repetition transmission is the same as a power allocation priority of PRACH transmission without repetition on a primary cell;
if the PRACH repetition transmission is performed on a primary cell, the power allocation priority of the PRACH repetition transmission is the same as a power allocation priority of PRACH transmission without repetition on the primary cell;
if the PRACH repetition transmission is performed on a non-primary cell, the power allocation priority of the PRACH repetition transmission is the same as a power allocation priority of PRACH transmission without repetition on the non-primary cell; or
a power allocation priority of PRACH repetition transmission is the same as a power allocation priority of PRACH transmission without repetition on a non-primary cell.

12. The method according to claim 1, wherein the PRACH repetition transmission is completed within first duration; and
the first duration comprises at least one of the following:
M times an SSB-to-RO mapping cycle;
N times an SSB-to-RO mapping association period;
L times an SSB-to-RO association pattern period;
a time value corresponding to a random access response window; or
an SSB to PRACH repetition transmission RO association pattern period, wherein
M, N, and L are positive integers.

13. A method for determining a PRACH repetition transmission resource, comprising:
a network side device determines a configured resource for PRACH repetition transmission; and
the network side device determines whether the configured resource is used for receiving a repeatedly transmitted PRACH.

14. The method according to claim 13, wherein the determining whether the configured resource is used for receiving a repeatedly transmitted PRACH comprises at least one of the following:
determining, based on validity of the configured resource, whether the configured resource is used for receiving the repeatedly transmitted PRACH;
determining, based on configuration information of a symbol where the configured resource is located, whether the configured resource is used for receiving the repeatedly transmitted PRACH; or
determining, based on a conflict situation between the configured resource and another signal resource, whether the configured resource is used for receiving the repeatedly transmitted PRACH.

15. The method according to claim 14, wherein the method further comprises:
determining the validity of the configured resource, wherein
the validity of the configured resource is related to a first gap requirement and/or time division duplex TDD uplink and downlink configuration; and
the first gap requirement is a timing gap requirement among SSB transmission, a symbol set used for SSB transmission, and a symbol set used for PRACH transmission.

16. The method according to claim 14, wherein the determining, based on the validity of the configured resource, whether the configured resource is used for receiving the repeatedly transmitted PRACH comprises at least one of the following:
determining, based on validity of a first RO in the configured resource, whether the configured resource is used for receiving the repeatedly transmitted PRACH; or
determining, based on validity of a common RO in the configured resource, whether the configured resource is used for receiving the repeatedly transmitted PRACH, wherein
the common RO is a commonly configured RO used for the PRACH repetition transmission and PRACH transmission without repetition; and the first RO is an RO used only for PRACH repetition transmission.

17. The method according to claim 16, wherein the determining, based on validity of a first RO in the configured resource, whether the configured resource is used for receiving the repeatedly transmitted PRACH comprises:
if a first target RO of the first RO is invalid, determining that the first target RO is not used for receiving the repeatedly transmitted PRACH.

18. The method according to claim 17, wherein the method further comprises:
determining a time domain position of a second target RO, wherein the second target RO is obtained by postponing a time domain position of the first target RO by one RO, and the second target RO is used for receiving the repeatedly transmitted PRACH.

19. The method according to claim 16, wherein the determining, based on validity of a common RO in the configured resource, whether the configured resource is used for receiving the repeatedly transmitted PRACH comprises at least one of the following:
if a first common RO of the common RO is invalid, determining that the first RO associated with the first common RO is not used for receiving the repeatedly transmitted PRACH;
if a first common RO of the common RO is valid but is not used in PRACH repetition transmission, determining that the first RO associated with the first common RO is not used for receiving the repeatedly transmitted PRACH;
if a first common RO of the common RO is invalid, determining that the first RO associated with the first common RO is used for receiving the repeatedly transmitted PRACH; or
if a first common RO of the common RO is valid but is not used in PRACH repetition transmission, determining that the first RO associated with the first common RO is used for receiving the repeatedly transmitted PRACH.

20. The method according to claim 14, wherein the determining, based on configuration information of a symbol where the configured resource is located, whether the configured resource is used for receiving the repeatedly transmitted PRACH comprises at least one of the following:
if a symbol where a third target RO of a first RO is located is configured as a flexible symbol in common TDD uplink and downlink configuration information and as downlink in dedicated TDD uplink and downlink configuration information, determining that the third target RO is not used for receiving the repeatedly transmitted PRACH;
if a symbol where a third target RO of a first RO is located is configured as a flexible symbol in common TDD uplink and downlink configuration information and as downlink in a DCI format, determining that the third target RO is not used for receiving the repeatedly transmitted PRACH; or
if a symbol where a third target RO of a first RO is located is configured as a flexible symbol in first configuration information, and a terminal receives a downlink signal on the symbol, determining that the third target RO is not used for receiving the repeatedly transmitted PRACH, wherein the first configuration information comprises: at least one of the common TDD uplink and downlink configuration information, the dedicated TDD uplink and downlink configuration information, or the DCI format; and
the first RO is an RO in the configured resource that is used only for PRACH repetition transmission.

21. The method according to claim 14, wherein the determining, based on a conflict situation between the configured resource and another signal resource, whether the configured resource is used for receiving the repeatedly transmitted PRACH comprises:
if a fourth target RO of a first RO at least partially overlaps a transmission resource of first uplink information in a random access procedure, determining that the fourth target RO is not used for receiving the repeatedly transmitted PRACH.

22. The method according to claim 13, wherein reception of the repeatedly transmitted PRACH is completed within first duration; and
the first duration comprises at least one of the following:
M times an SSB-to-RO mapping cycle;
N times an SSB-to-RO mapping association period;
L times an SSB-to-RO association pattern period;
a time value corresponding to a random access response window; or
an SSB to PRACH repetition transmission RO association pattern period, wherein
M, N, and L are positive integers.

23. The method according to claim 13, wherein the method further comprises:
sending, to a terminal, resource configuration information for the PRACH repetition transmission, wherein the resource configuration information indicates the configured resource.

24. An apparatus for determining a PRACH repetition transmission resource, comprising:
a first acquiring module, configured to acquire resource configuration information for physical random access channel PRACH repetition transmission, wherein the resource configuration information indicates a configured resource for the PRACH repetition transmission; and
a first determining module, configured to determine whether the configured resource is used for PRACH repetition transmission.

25. The apparatus according to claim 24, wherein the first determining module comprises at least one of the following:
a first determining unit, configured to determine, based on validity of the configured resource, whether the configured resource is used for PRACH repetition transmission;
a second determining unit, configured to determine, based on configuration information of a symbol where the configured resource is located, whether the configured resource is used for PRACH repetition transmission; or
a third determining unit, configured to determine, based on a conflict situation between the configured resource and another signal resource, whether the configured resource is used for PRACH repetition transmission.

26. The apparatus according to claim 25, wherein the apparatus further comprises:
a second determining module, configured to determine the validity of the configured resource, wherein
the validity of the configured resource is related to a first gap requirement and/or time division duplex TDD uplink and downlink configuration; and
the first gap requirement is a timing gap requirement among SSB transmission, a symbol set used for SSB transmission, and a symbol set used for PRACH transmission.

27. The apparatus according to claim 25, wherein the first determining unit comprises at least one of the following:
a first determining subunit, configured to determine, based on validity of a first RO in the configured resource, whether the first RO is used for PRACH repetition transmission; or
a second determining subunit, configured to determine, based on validity of a common RO in the configured resource, whether a first RO in the configured resource is used for PRACH repetition transmission, wherein
the common RO is a commonly configured RO used for the PRACH repetition transmission and PRACH transmission without repetition; and the first RO is an RO used only for PRACH repetition transmission.

28. The apparatus according to claim 27, wherein the first determining subunit is specifically configured to:
if a first target RO of the first RO is invalid, determine that the first target RO is not used for PRACH repetition transmission.

29. The apparatus according to claim 28, wherein the apparatus further comprises:
a first processing module, configured to postpone a time domain position of the first target RO by one RO to obtain a second target RO, wherein the second target RO is used for PRACH repetition transmission.

30. The apparatus according to claim 28, wherein the first target RO is counted in a quantity of ROs for the PRACH repetition transmission.

31. The apparatus according to claim 27, wherein the second determining subunit is specifically configured to perform at least one of the following operations:
if a first common RO of the common RO is invalid, determining that the first RO associated with the first common RO is not used for PRACH repetition transmission;
if a first common RO of the common RO is valid but is not used in PRACH repetition transmission, determining that the first RO associated with the first common RO is not used for PRACH repetition transmission;
if a first common RO of the common RO is invalid, determining that the first RO associated with the first common RO is used for PRACH repetition transmission; or
if a first common RO of the common RO is valid but is not used in PRACH repetition transmission, determining that the first RO associated with the first common RO is used for PRACH repetition transmission.

32. The apparatus according to claim 25, wherein the second determining unit is configured to perform at least one of the following operations:
if a symbol where a third target RO of a first RO is located is configured as a flexible symbol in common TDD uplink and downlink configuration information and as downlink in dedicated TDD uplink and downlink configuration information, determining that the third target RO is not used for PRACH repetition transmission;
if a symbol where a third target RO of a first RO is located is configured as a flexible symbol in common TDD uplink and downlink configuration information and as downlink in a DCI format, determining that the third target RO is not used for PRACH repetition transmission; or
if a symbol where a third target RO of a first RO is located is configured as a flexible symbol in first configuration information, and the terminal receives a downlink signal on the symbol, determining that the third target RO is not used for PRACH repetition transmission, wherein the first configuration information comprises: at least one of the common TDD uplink and downlink configuration information, the dedicated TDD uplink and downlink configuration information, or the DCI format; and
the first RO is an RO in the configured resource that is used only for PRACH repetition transmission.

33. The apparatus according to claim 25, wherein the third determining unit is configured to perform at least one of the following operations:
if a fourth target RO of a first RO at least partially overlaps a transmission resource of first uplink information in a random access procedure, determining that the fourth target RO is not used for PRACH repetition transmission, wherein the first RO is an RO in the configured resource that is used only for PRACH repetition transmission;
if high layer signaling instructs the terminal to receive a downlink signal in a set of symbols within a slot, DCI format information indicates that the terminal performs PRACH repetition transmission in a fourth target RO, and the fourth target RO overlaps at least one symbol in a symbol set where the slot is located, determining that the fourth target RO is not used for PRACH repetition transmission; or
if high layer signaling instructs the terminal to perform PRACH repetition transmission in a target symbol of a fourth target RO, and the DCI format information indicates that the terminal receives a downlink signal in a symbol subset of the target symbol, determining that the fourth target RO is not used for PRACH repetition transmission.

34. The apparatus according to claim 24, wherein the apparatus further comprises:
a third determining module, configured to determine a power allocation priority of the PRACH repetition transmission, wherein
the power allocation priority comprises at least one of the following:
a power allocation priority of PRACH repetition transmission is lower than a power allocation priority of PRACH transmission without repetition on a primary cell;
a power allocation priority of PRACH repetition transmission is the same as a power allocation priority of PRACH transmission without repetition on a primary cell;
if the PRACH repetition transmission is performed on a primary cell, the power allocation priority of the PRACH repetition transmission is the same as a power allocation priority of PRACH transmission without repetition on the primary cell;
if the PRACH repetition transmission is performed on a non-primary cell, the power allocation priority of the PRACH repetition transmission is the same as a power allocation priority of PRACH transmission without repetition on the non-primary cell; or
a power allocation priority of PRACH repetition transmission is the same as a power allocation priority of PRACH transmission without repetition on a non-primary cell.

35. The apparatus according to claim 24, wherein the PRACH repetition transmission is completed within first duration; and
the first duration comprises at least one of the following:
M times an SSB-to-RO mapping cycle;
N times an SSB-to-RO mapping association period;
L times an SSB-to-RO association pattern period;
a time value corresponding to a random access response window; or
an SSB to PRACH repetition transmission RO association pattern period, wherein
M, N, and L are positive integers.

36. An apparatus for determining a PRACH repetition transmission resource, comprising:
a fourth determining module, configured to determine a configured resource for PRACH repetition transmission; and
a fifth determining module, configured to determine whether the configured resource is used for receiving a repeatedly transmitted PRACH.

37. The apparatus according to claim 36, wherein the fifth determining module comprises:
a fourth determining unit, configured to determine, based on validity of the configured resource, whether the configured resource is used for receiving the repeatedly transmitted PRACH;
a fifth determining unit, configured to determine, based on configuration information of a symbol where the configured resource is located, whether the configured resource is used for receiving the repeatedly transmitted PRACH; and
a sixth determining unit, configured to determine, based on a conflict situation between the configured resource and another signal resource, whether the configured resource is used for receiving the repeatedly transmitted PRACH.

38. The apparatus according to claim 37, wherein the apparatus further comprises:
a sixth determining module, configured to determine the validity of the configured resource, wherein
the validity of the configured resource is related to a first gap requirement and/or time division duplex TDD uplink and downlink configuration; and
the first gap requirement is a timing gap requirement among SSB transmission, a symbol set used for SSB transmission, and a symbol set used for PRACH transmission.

39. The apparatus according to claim 37, wherein the fourth determining unit comprises at least one of the following:
a third determining subunit, configured to determine, based on validity of a first RO in the configured resource, whether the configured resource is used for receiving the repeatedly transmitted PRACH; or
a fourth determining subunit, configured to determine, based on validity of a common RO in the configured resource, whether the configured resource is used for receiving the repeatedly transmitted PRACH, wherein
the common RO is a commonly configured RO used for the PRACH repetition transmission and PRACH transmission without repetition; and the first RO is an RO used only for PRACH repetition transmission.

40. The apparatus according to claim 39, wherein the third determining subunit is specifically configured to:
if a first target RO of the first RO is invalid, determine that the first target RO is not used for receiving the repeatedly transmitted PRACH.

41. The apparatus according to claim 40, wherein the apparatus further comprises:
a seventh determining module, configured to determine a time domain position of a second target RO, wherein the second target RO is obtained by postponing a time domain position of the first target RO by one RO, and the second target RO is used for receiving the repeatedly transmitted PRACH.

42. The apparatus according to claim 39, wherein the fourth determining subunit is configured to perform at least one of the following operations:
if a first common RO of the common RO is invalid, determining that the first RO associated with the first common RO is not used for receiving the repeatedly transmitted PRACH;
if a first common RO of the common RO is valid but is not used in PRACH repetition transmission, determining that the first RO associated with the first common RO is not used for receiving the repeatedly transmitted PRACH;
if a first common RO of the common RO is invalid, determining that the first RO associated with the first common RO is used for receiving the repeatedly transmitted PRACH; or
if a first common RO of the common RO is valid but is not used in PRACH repetition transmission, determining that the first RO associated with the first common RO is used for receiving the repeatedly transmitted PRACH.

43. The apparatus according to claim 37, wherein the fifth determining unit is configured to perform at least one of the following operations:
if a symbol where a third target RO of a first RO is located is configured as a flexible symbol in common TDD uplink and downlink configuration information and as downlink in dedicated TDD uplink and downlink configuration information, determining that the third target RO is not used for receiving the repeatedly transmitted PRACH;
if a symbol where a third target RO of a first RO is located is configured as a flexible symbol in common TDD uplink and downlink configuration information and as downlink in a DCI format, determining that the third target RO is not used for receiving the repeatedly transmitted PRACH; or
if a symbol where a third target RO of a first RO is located is configured as a flexible symbol in first configuration information, and a terminal receives a downlink signal on the symbol, determining that the third target RO is not used for receiving the repeatedly transmitted PRACH, wherein the first configuration information comprises: at least one of the common TDD uplink and downlink configuration information, the dedicated TDD uplink and downlink configuration information, or the DCI format; and
the first RO is an RO in the configured resource that is used only for PRACH repetition transmission.

44. The apparatus according to claim 37, wherein the sixth determining unit is configured to:
if a fourth target RO of a first RO at least partially overlaps a transmission resource of first uplink information in a random access procedure, determine that the fourth target RO is not used for receiving the repeatedly transmitted PRACH.

45. The apparatus according to claim 36, wherein reception of the repeatedly transmitted PRACH is completed within first duration; and
the first duration comprises at least one of the following:
M times an SSB-to-RO mapping cycle;
N times an SSB-to-RO mapping association period;
L times an SSB-to-RO association pattern period;
a time value corresponding to a random access response window; or
an SSB to PRACH repetition transmission RO association pattern period, wherein
M, N, and L are positive integers.

46. The apparatus according to claim 36, wherein the apparatus further comprises:
a first sending module, configured to send, to a terminal, resource configuration information for the PRACH repetition transmission, wherein the resource configuration information indicates the configured resource.

47. A terminal, comprising a processor and a memory, wherein the memory stores a program or instructions executable on the processor, and the program or the instructions, when executed by the processor, implement steps of the method for determining a PRACH repetition transmission resource according to any one of claims 1 to 12.

48. A network side device, comprising a processor and a memory, wherein the memory stores a program or instructions executable on the processor, and the program or the instructions, when executed by the processor, implement steps of the method for determining a PRACH repetition transmission resource according to any one of claims 13 to 23.

49. A readable storage medium, wherein the readable storage medium stores a program or instructions, and the program or instructions, when executed by a processor, implement steps of the method for determining a PRACH repetition transmission resource according to any one of claims 1 to 12 or implement steps of the method for determining a PRACH repetition transmission resource according to any one of claims 13 to 23.
